# EUROPEAN PATENT APPLICATION

(11) **EP 4 838 953 A1**
(43) Date of publication of application: **11.11.2026**
(21) Application number: 25751629.4
(22) Date of filing: 07.02.2025
(51) Int. Cl.: H04W 36/00

(54) **METHOD FOR PROCESSING CANDIDATE CELL CONFIGURATION INFORMATION, DEVICE, STORAGE MEDIUM, AND PRODUCT**

(30) Priority: 08.02.2024 CN 202410175843
(71) Applicant: Honor Device Co., Ltd., Shenzhen, Guangdong 518040 (CN)
(72) Inventor: LIU, Xu, Shenzhen, Guangdong 518040 (CN)
(74) Representative: Gill Jennings & Every LLP
(86) International application number: PCT/CN2025/076116
(87) International publication number: WO 2025/168030

(57) **Abstract**

Embodiments of this application provide a method for processing configuration information of a candidate cell, a device, a storage medium, and a product, and relate to the field of communication technologies. The method includes: A terminal device receives first indication information sent by a network device of a primary cell, where the first indication information indicates, to the terminal device, a policy for processing configuration information of an SCG LTM candidate primary secondary cell when a CPC occurs. The terminal device retains or releases the configuration information of the SCG LTM candidate primary secondary cell based on the first indication information when determining a CPC target primary secondary cell to change to. Therefore, the configuration information of the SCG LTM candidate primary secondary cell can be effectively managed. Release is performed in a timely manner when required, to reduce a load of the terminal device. Retaining is performed in a timely manner when required, to avoid a waste of resources and latency overheads.

## Description

This application claims priority to Chinese Patent Application No. 202410175843.9, filed with the China National Intellectual Property Administration on February 8, 2024 and entitled "METHOD FOR PROCESSING CONFIGURATION INFORMATION OF CANDIDATE CELL, DEVICE, STORAGE MEDIUM, AND PRODUCT", which is incorporated herein by reference in its entirety.

### TECHNICAL FIELD

This application relates to the field of communication technologies, and in particular, to a method for processing configuration information of a candidate cell, a device, a storage medium, and a product.

### BACKGROUND

With continuous development of communication and dual connectivity technologies, a primary secondary cell needs to be used to provide a communication service, to enhance stability of a network environment. This involves change mechanisms of the primary secondary cell. For the change of the primary secondary cell, a CPC (Conditional PScell Change, conditional primary secondary cell change) mechanism and a secondary cell group layer1/2 triggered mobility (Secondary Cell Group Layer1/2 triggered mobility, SCG LTM) mechanism are involved. Therefore, when a primary secondary cell of the CPC mechanism is changed, configuration information of an SCG LTM candidate primary secondary cell of a terminal device needs to be effectively processed.

Therefore, currently, a solution for effectively processing the configuration information of the SCG LTM candidate primary secondary cell is urgently needed, so that it can be released in time when it is not necessary to retain the configuration information of the SCG LTM candidate primary secondary cell, to reduce a load of the terminal device, and it can be retained in time when it is necessary to retain the configuration information of the SCG LTM candidate primary secondary cell, to avoid a waste of resources and latency overheads caused by repeatedly sending configuration information of an SCG LTM candidate cell.

### SUMMARY

Embodiments of this application provide a method for processing configuration information of a candidate cell, a device, a storage medium, and a product, which are applied to the field of communication technologies, to quickly retain or release configuration information of an SCG LTM candidate primary secondary cell when a CPC occurs.

According to a first aspect, an embodiment of this application proposes a method for processing configuration information of a candidate cell. The method may be performed by a terminal device, or may be performed by a component (for example, a chip or a circuit) configured in the terminal device. This is not limited in this application.

For example, the method includes: receiving first indication information sent by a network device of a primary cell, where the first indication information indicates, to a terminal device, a policy for processing configuration information of a secondary cell group layer1/2 triggered mobility SCG LTM candidate primary secondary cell when a conditional primary secondary cell change CPC occurs; and retaining or releasing the configuration information of the SCG LTM candidate primary secondary cell based on the first indication information when determining a CPC target primary secondary cell to change to.

Therefore, before the CPC occurs, the method for processing configuration information of a candidate cell provided in this embodiment of this application has provided a processing policy of retaining or releasing the configuration information of the SCG LTM candidate primary secondary cell for the terminal device, that is, the first indication information. The terminal device may retain or release the configuration information of the SCG LTM candidate primary secondary cell based on the first indication information when determining a CPC target primary secondary cell to change to.

If the terminal device always retains the configuration information of the SCG LTM candidate primary secondary cell when a CPC occurs, or first retains the configuration information of the SCG LTM candidate primary secondary cell, and then management personnel indicate to perform retaining or release on schedule. On the one hand, a large storage load is brought to the terminal device, and service efficiency of the terminal device is reduced. On the other hand, timeliness of retaining or releasing of the terminal device is reduced. Therefore, before the CPC occurs, the technical solutions provided in this application has provided indication information of the processing policy of retaining or releasing the configuration information of the SCG LTM candidate primary secondary cell for the terminal device. In this case, when the CPC target primary secondary cell to change to is determined, the configuration information of the SCG LTM candidate primary secondary cell may be retained or released in time based on the first indication information, without determining to retain or release the configuration information of the SCG LTM candidate primary secondary cell after the CPC occurs. Alternatively, retaining or release is further performed based on a manual instruction. This effectively improves timeliness of retaining or releasing the configuration information of the SCG LTM candidate primary secondary cell.

With reference to the first aspect, in some implementations of the first aspect, the first indication information includes at least one of the following:
(1) first retaining indication information corresponding to configuration information of at least one SCG LTM candidate primary secondary cell;
(2) first release indication information corresponding to configuration information of at least one SCG LTM candidate primary secondary cell;
(3) first retaining common indication information corresponding to configuration information of at least one SCG LTM candidate primary secondary cell represented in a form of a secondary cell set; and
(4) first release common indication information corresponding to configuration information of at least one SCG LTM candidate primary secondary cell represented in a form of a secondary cell set.

Optionally, the method further includes: retaining the configuration information of the SCG LTM candidate primary secondary cell when a first condition is met, where the first condition includes at least one of the following conditions:
1. the first indication information includes first retaining indication information corresponding to the configuration information of the SCG LTM candidate primary secondary cell;
2. the first indication information includes first release indication information, and the first release indication information does not include first release indication information corresponding to the configuration information of the SCG LTM candidate primary secondary cell;
3. the first indication information includes first retaining common indication information of a secondary cell set to which the SCG LTM candidate primary secondary cell belongs; and
4. the first indication information includes first release common indication information, and the first release common indication information does not include first release common indication information of a secondary cell set to which the SCG LTM candidate primary secondary cell belongs.

In other words, when the first indication information indicates retaining or release of the configuration information of the at least one SCG LTM candidate primary secondary cell, the terminal device may determine, based on specific content indicated by the first indication information, whether at least one of the foregoing first conditions is currently met, and retain the configuration information of the SCG LTM candidate primary secondary cell when it is determined that at least one of the foregoing first conditions is currently met. Therefore, the terminal device may selectively and timely retain the configuration information of the SCG LTM candidate primary secondary cell, to meet a subsequent LTM mechanism handover requirement.

It should be understood that the indication information related to "retain" or "release" has a function of indicating the terminal device to retain or release the configuration information of the SCG LTM candidate primary secondary cell. Therefore, after the terminal device receives the first indication information, if the first indication information includes indication information related to "retain" corresponding to to-be-determined configuration information of an SCG LTM candidate primary secondary cell, or includes indication information related to "release" but does not include indication information related to "release" corresponding to the to-be-determined configuration information of the SCG LTM candidate primary secondary cell, a retaining action may be performed correspondingly on the to-be-determined configuration information of the SCG LTM candidate primary secondary cell.

Optionally, the method further includes: releasing the configuration information of the SCG LTM candidate primary secondary cell when a second condition is met, where the second condition includes at least one of the following conditions:
1. the first indication information includes first release indication information corresponding to the configuration information of the SCG LTM candidate primary secondary cell;
2. the first indication information includes first retaining indication information, and the first retaining indication information does not include first retaining indication information corresponding to the configuration information of the SCG LTM candidate primary secondary cell;
3. the first indication information includes first release common indication information of a secondary cell set to which the SCG LTM candidate primary secondary cell belongs; and
4. the first indication information includes first retaining common indication information, and the first retaining common indication information does not include first retaining common indication information of a secondary cell set to which the SCG LTM candidate primary secondary cell belongs.

In other words, when the first indication information indicates retaining or release of the configuration information of the at least one SCG LTM candidate primary secondary cell, the terminal device may determine, based on specific content indicated by the first indication information, whether at least one of the foregoing second conditions is currently met, and release the configuration information of the SCG LTM candidate primary secondary cell when it is determined that at least one of the foregoing second conditions is currently met. Therefore, the terminal device may selectively and timely release the configuration information of the SCG LTM candidate primary secondary cell, to reduce a terminal load in time.

As described above, after the terminal device receives the first indication information, if the first indication information includes indication information related to "release" corresponding to to-be-determined configuration information of an SCG LTM candidate primary secondary cell, or includes indication information related to "retain" but does not include indication information related to "retain" corresponding to the to-be-determined configuration information of the SCG LTM candidate primary secondary cell, a release action may be performed correspondingly on the configuration information of the SCG LTM candidate primary secondary cell.

With reference to the first aspect, in some implementations of the first aspect, the first indication information further includes: second retaining indication information corresponding to configuration information of at least one SCG LTM candidate primary secondary cell when the primary cell changes simultaneously; or second release indication information corresponding to configuration information of at least one SCG LTM candidate primary secondary cell when the primary cell changes simultaneously.

Optionally, in a case of retaining or releasing the configuration information of the SCG LTM candidate primary secondary cell based on the first indication information when determining a CPC target primary secondary cell to change to, the method includes: retaining or releasing the configuration information of the SCG LTM candidate primary secondary cell based on the first indication information when the primary cell and a CPC primary secondary cell are to be changed simultaneously.

In other words, when a CPC occurs, the primary cell may also change simultaneously. Therefore, the terminal device may retain or release the configuration information of the SCG LTM candidate primary secondary cell based on retaining or release of the configuration information of the at least one SCG LTM candidate primary secondary cell indicated in the first indication information, and further based on another content indicated by the first indication information when the primary cell changes simultaneously. When it is determined that the primary cell and the CPC primary secondary cell are to be changed simultaneously, the configuration information of the SCG LTM candidate primary secondary cell may be determined to be retained or released. The configuration information of the SCG LTM candidate primary secondary cell is retained and released in time. This effectively improves timeliness of retaining or releasing the configuration information of the SCG LTM candidate primary secondary cell when the primary cell and the CPC primary secondary cell are to be changed simultaneously.

Optionally, the method further includes: retaining the configuration information of the SCG LTM candidate primary secondary cell when a third condition is met, where the third condition is at least one of the following conditions:
1. the first indication information includes second retaining indication information corresponding to the configuration information of the SCG LTM candidate primary secondary cell when the primary cell changes simultaneously, and the first indication information includes first retaining indication information corresponding to the configuration information of the SCG LTM candidate primary secondary cell;
2. the first indication information includes second retaining indication information corresponding to the configuration information of the SCG LTM candidate primary secondary cell when the primary cell changes simultaneously, and the first indication information includes first retaining common indication information of a secondary cell set to which the SCG LTM candidate primary secondary cell belongs;
3. the first indication information includes second retaining indication information corresponding to the configuration information of the SCG LTM candidate primary secondary cell when the primary cell changes simultaneously, the first indication information includes first release indication information, and the first release indication information does not include first release indication information corresponding to the configuration information of the SCG LTM candidate primary secondary cell;
4. the first indication information includes second retaining indication information corresponding to the configuration information of the SCG LTM candidate primary secondary cell when the primary cell changes simultaneously, the first indication information includes first release common indication information, and the first release common indication information does not include first release common indication information of a secondary cell set to which the SCG LTM candidate primary secondary cell belongs;
5. the first indication information includes second release indication information, the second release indication information does not include second release indication information corresponding to the configuration information of the SCG LTM candidate primary secondary cell when the primary cell changes simultaneously, and the first indication information includes first retaining indication information corresponding to the configuration information of the SCG LTM candidate primary secondary cell;
6. the first indication information includes second release indication information, the second release indication information does not include second release indication information corresponding to the configuration information of the SCG LTM candidate primary secondary cell when the primary cell changes simultaneously, and the first indication information includes first retaining common indication information of a secondary cell set to which the SCG LTM candidate primary secondary cell belongs;
7. the first indication information includes second release indication information, the second release indication information does not include second release indication information corresponding to the configuration information of the SCG LTM candidate primary secondary cell when the primary cell changes simultaneously, the first indication information includes first release indication information, and the first release indication information does not include first release indication information corresponding to the configuration information of the SCG LTM candidate primary secondary cell; and
8. the first indication information includes second release indication information, the second release indication information does not include second release indication information corresponding to the configuration information of the SCG LTM candidate primary secondary cell when the primary cell changes simultaneously, the first indication information includes first release common indication information, and the first release common indication information does not include first release common indication information of a secondary cell set to which the SCG LTM candidate primary secondary cell belongs.

In other words, the terminal device may determine, based on retaining or release of the configuration information of the at least one SCG LTM candidate primary secondary cell indicated in the first indication information, and further based on another content indicated by the first indication information when the primary cell changes simultaneously, whether at least one of the foregoing third conditions is met, and retain the configuration information of the SCG LTM candidate primary secondary cell when it is determined that at least one of the foregoing third conditions is met. Therefore, the terminal device may selectively and timely retain the configuration information of the SCG LTM candidate primary secondary cell, to meet a subsequent LTM mechanism handover requirement.

It should be understood that, in consideration of a feature that a primary secondary cell assists a primary cell in providing a network service, it is determined that when the primary cell changes simultaneously, another content indicated by the first indication information is always used as a priority determining condition, that is, it is preferentially determined that the another content indicated by the first indication information is retaining or release. For example, when it is indicated to retain, that is, the first indication information includes the second retaining indication information corresponding to the to-be-determined configuration information of the SCG LTM candidate primary secondary cell, or includes the second release indication information but does not include the second release indication information corresponding to the to-be-determined configuration information of the SCG LTM candidate primary secondary cell, it is further determined whether the indication information related to "retain" or "release" corresponding to the to-be-determined configuration information of the SCG LTM candidate primary secondary cell in the first indication information is retaining or release, and if retaining is still indicated, it is determined to retain the to-be-determined configuration information of the SCG LTM candidate primary secondary cell.

Optionally, the method further includes: releasing the configuration information of the SCG LTM candidate primary secondary cell when a fourth condition is met, where the fourth condition includes:
1. the first indication information includes second release indication information corresponding to the configuration information of the SCG LTM candidate primary secondary cell when the primary cell changes simultaneously;
2. the first indication information includes second retaining indication information, and the second retaining indication information does not include second retaining indication information corresponding to the configuration information of the SCG LTM candidate primary secondary cell when the primary cell changes simultaneously;
3. the first indication information includes second retaining indication information corresponding to the configuration information of the SCG LTM candidate primary secondary cell when the primary cell changes simultaneously, and the first indication information includes first release indication information corresponding to the configuration information of the SCG LTM candidate primary secondary cell;
4. the first indication information includes second retaining indication information corresponding to the configuration information of the SCG LTM candidate primary secondary cell when the primary cell changes simultaneously, and the first indication information includes first release common indication information of a secondary cell set to which the SCG LTM candidate primary secondary cell belongs;
5. the first indication information includes second release indication information, the second release indication information does not include second release indication information corresponding to the configuration information of the SCG LTM candidate primary secondary cell when the primary cell changes simultaneously, and the first indication information includes first release indication information corresponding to the configuration information of the SCG LTM candidate primary secondary cell; and
6. the first indication information includes second release indication information, the second release indication information does not include second release indication information corresponding to the configuration information of the SCG LTM candidate primary secondary cell when the primary cell changes simultaneously, and the first indication information includes first release common indication information of a secondary cell set to which the SCG LTM candidate primary secondary cell belongs.

In other words, the terminal device may determine, based on retaining or release of the configuration information of the at least one SCG LTM candidate primary secondary cell indicated in the first indication information, and further based on another content indicated by the first indication information when the primary cell changes simultaneously, whether at least one of the foregoing fourth conditions is met, and release the configuration information of the SCG LTM candidate primary secondary cell when it is determined that at least one of the foregoing fourth conditions is met. Therefore, the terminal device may selectively and timely release the configuration information of the SCG LTM candidate primary secondary cell, to reduce a terminal load.

As described above, the feature that a primary secondary cell assists a primary cell in providing a network service is further considered. That is, in a dual-connectivity state, when an LTM change occurs in the primary cell, the primary secondary cell may change adaptively. Therefore, when the another content indicated by the first indication information indicates to release, that is, the first indication information includes the second release indication information corresponding to the to-be-determined configuration information of the SCG LTM candidate primary secondary cell, or includes the second retaining indication information but does not include the second retaining indication information corresponding to the to-be-determined configuration information of the SCG LTM candidate primary secondary cell, it is directly determined to release the to-be-determined configuration information of the SCG LTM candidate primary secondary cell. When it is indicated to retain, that is, the first indication information includes the second retaining indication information corresponding to the to-be-determined configuration information of the SCG LTM candidate primary secondary cell, or includes the second release indication information but does not include the second release indication information corresponding to the to-be-determined configuration information of the SCG LTM candidate primary secondary cell, it is further determined whether the indication information related to "retain" or "release" corresponding to the to-be-determined configuration information of the SCG LTM candidate primary secondary cell in the first indication information is retaining or release, and if release is indicated, it is determined to release the to-be-determined configuration information of the SCG LTM candidate primary secondary cell.

With reference to the first aspect, in some implementations of the first aspect, the first indication information includes: indication information that the terminal device autonomously processes the configuration information of the SCG LTM candidate primary secondary cell; and a secondary cell group to which each SCG LTM candidate primary secondary cell belongs.

Optionally, the method includes: retaining the configuration information of the SCG LTM candidate primary secondary cell when a fifth condition is met, where the fifth condition is:
the secondary cell group to which the candidate primary secondary cell belongs is the same as a secondary cell group to which a source primary secondary cell belongs.

In other words, the terminal device may further autonomously determine, based on the first indication information, to retain the configuration information of the SCG LTM candidate primary secondary cell, and may determine, based on a secondary cell group to which each SCG LTM candidate primary secondary cell belongs in the first indication information, whether the fifth condition is met. Therefore, when it is determined that the fifth condition is met, the configuration information of the SCG LTM candidate primary secondary cell is retained. Therefore, the terminal device may selectively and timely retain the configuration information of the SCG LTM candidate primary secondary cell, to meet a subsequent LTM mechanism handover requirement.

It should be understood that, in consideration of a feature of subsequent LTM handover, that is, in a dual-connectivity state, when the secondary cell group to which the candidate primary secondary cell belongs is the same as the secondary cell group to which the source primary secondary cell belongs, there is a high probability that subsequent LTM handover is still in the secondary cell group. Therefore, when the terminal device autonomously processes the configuration information of the SCG LTM candidate primary secondary cell, and determines that the secondary cell group to which the candidate primary secondary cell belongs is the same as the secondary cell group to which the source primary secondary cell belongs, it may be determined to retain the configuration information of the SCG LTM candidate primary secondary cell.

It should be further understood that, when the first indication information indicates retaining or release of the configuration information of the at least one SCG LTM candidate primary secondary cell, the first indication information does not indicate that the terminal device autonomously determines to retain or release the configuration information of the SCG LTM candidate primary secondary cell. That is, the foregoing two indication scenarios are independent of each other.

Optionally, the method includes: releasing the configuration information of the SCG LTM candidate primary secondary cell when a sixth condition is met, where the sixth condition is:
the secondary cell group to which the candidate primary secondary cell belongs is different from the secondary cell group to which the source primary secondary cell belongs.

In other words, the terminal device may further autonomously determine, based on the first indication information, to release the configuration information of the SCG LTM candidate primary secondary cell, and may determine, based on a secondary cell group to which each SCG LTM candidate primary secondary cell belongs in the first indication information, whether the sixth condition is met. Therefore, when it is determined that the sixth condition is met, the configuration information of the SCG LTM candidate primary secondary cell is released. Therefore, the terminal device may selectively and timely release the configuration information of the SCG LTM candidate primary secondary cell, to reduce a terminal load.

As described above, the feature of subsequent LTM handover is also considered. That is, in a dual-connectivity state, when the secondary cell group to which the candidate primary secondary cell belongs is different from the secondary cell group to which the source primary secondary cell belongs, it is impossible to determine whether there is a high probability that subsequent LTM handover is still in the secondary cell group. Therefore, when the terminal device autonomously processes the configuration information of the SCG LTM candidate primary secondary cell, and when the terminal device determines that the secondary cell group to which the candidate primary secondary cell belongs is different from the secondary cell group to which the source primary secondary cell belongs, it may be determined to release the configuration information of the SCG LTM candidate primary secondary cell. The load of the terminal can be effectively reduced.

Optionally, the method further includes: sending second indication information to the network device of the primary cell, where the second indication information indicates to the network device of the primary cell that the terminal device has released the configuration information of the SCG LTM candidate primary secondary cell.

In other words, if autonomously determining to release the configuration information of the SCG LTM candidate primary secondary cell, the terminal device may send the second indication information to the network device of the primary cell based on a connection to the network device of the primary cell and on a basis of receiving the first indication information sent by the network device of the primary cell. A release state of the configuration information of the SCG LTM candidate primary secondary cell is transferred to the network device of the primary cell based on the second indication information. This facilitates configuring the configuration information of the SCG LTM candidate primary secondary cell in time when the network device of the primary cell triggers the LTM mechanism subsequently for the terminal device.

With reference to the first aspect, in some implementations of the first aspect, the first indication information further includes: second retaining indication information corresponding to configuration information of at least one SCG LTM candidate primary secondary cell when the primary cell changes simultaneously; or second release indication information corresponding to configuration information of at least one SCG LTM candidate primary secondary cell when the primary cell changes simultaneously.

Optionally, in a case of retaining or releasing the configuration information of the SCG LTM candidate primary secondary cell based on the first indication information when determining a CPC target primary secondary cell to change to, the method includes: retaining or releasing the configuration information of the SCG LTM candidate primary secondary cell based on the first indication information when the primary cell and a CPC primary secondary cell are to be changed simultaneously.

In other words, when a CPC occurs, the primary cell may also change simultaneously. Therefore, the terminal device may retain or release the configuration information of the SCG LTM candidate primary secondary cell based on the fact, indicated in the first indication information, that the terminal device autonomously determines to retain or release the configuration information of the SCG LTM candidate primary secondary cell, and further based on the another content indicated by the first indication information when the primary cell changes simultaneously. In this way, when it is determined that the primary cell and the CPC primary secondary cell are to be changed simultaneously, the configuration information of the SCG LTM candidate primary secondary cell may be determined to be retained or released. Therefore, the configuration information of the SCG LTM candidate primary secondary cell is retained and released in time. This improves timeliness of retaining or releasing the configuration information of the SCG LTM candidate primary secondary cell when the primary cell and the CPC primary secondary cell are to be changed simultaneously.

Optionally, the method further includes: retaining the configuration information of the SCG LTM candidate primary secondary cell when a seventh condition is met, where the seventh condition is at least one of the following conditions:
1. the first indication information includes second retaining indication information corresponding to the configuration information of the SCG LTM candidate primary secondary cell when the primary cell changes simultaneously, and the secondary cell group to which the candidate primary secondary cell belongs is the same as a secondary cell group to which a source primary secondary cell belongs; and
2. the first indication information includes second release indication information, the second release indication information does not include second release indication information corresponding to the configuration information of the SCG LTM candidate primary secondary cell, and the secondary cell group to which the candidate primary secondary cell belongs is the same as the secondary cell group to which the source primary secondary cell belongs.

In other words, the terminal device may determine, based on the fact, indicated in the first indication information, that the terminal device autonomously determines to retain or release the configuration information of the SCG LTM candidate primary secondary cell, and further based on the another content indicated by the first indication information when the primary cell changes simultaneously, whether at least one of the foregoing seventh conditions is met, and retain the configuration information of the SCG LTM candidate primary secondary cell when it is determined that at least one of the foregoing seventh conditions is met. Therefore, the terminal device may selectively and timely retain the configuration information of the SCG LTM candidate primary secondary cell, to meet a subsequent LTM mechanism handover requirement.

It should be understood that, in consideration of a feature that a primary secondary cell assists a primary cell in providing a network service, it is determined that when the primary cell changes simultaneously, another content indicated by the first indication information is always used as a priority determining condition, that is, it is preferentially determined that the another content indicated by the first indication information is retaining or release. For example, when it is indicated to retain, that is, the first indication information includes the second retaining indication information corresponding to the to-be-determined configuration information of the SCG LTM candidate primary secondary cell, or includes the second release indication information but does not include the second release indication information corresponding to the to-be-determined configuration information of the SCG LTM candidate primary secondary cell, it is further determined whether the secondary cell group to which the candidate primary secondary cell belongs is the same as the secondary cell group to which the source primary secondary cell belongs, and if the secondary cell group to which the candidate primary secondary cell belongs is the same as the secondary cell group to which the source primary secondary cell belongs, it is determined to retain the configuration information of the SCG LTM candidate primary secondary cell.

Optionally, the method further includes: releasing the configuration information of the SCG LTM candidate primary secondary cell when an eighth condition is met, where the eighth condition is at least one of the following conditions:
1. the first indication information includes second release indication information corresponding to the configuration information of the SCG LTM candidate primary secondary cell when the primary cell changes simultaneously;
2. the first indication information includes second retaining indication information, and the second retaining indication information does not include second retaining indication information corresponding to the configuration information of the SCG LTM candidate primary secondary cell when the primary cell changes simultaneously;
3. the first indication information includes second retaining indication information corresponding to the configuration information of the SCG LTM candidate primary secondary cell when the primary cell changes simultaneously, and the secondary cell group to which the candidate primary secondary cell belongs is different from a secondary cell group to which a source primary secondary cell belongs; and
4. the first indication information includes second release indication information, the second release indication information does not include second release indication information corresponding to the configuration information of the SCG LTM candidate primary secondary cell when the primary cell changes simultaneously, and the secondary cell group to which the candidate primary secondary cell belongs is different from the secondary cell group to which the source primary secondary cell belongs.

In other words, the terminal device may determine, based on the fact, indicated in the first indication information, that the terminal device autonomously determines to retain or release the configuration information of the SCG LTM candidate primary secondary cell, and further based on the another content indicated by the first indication information when the primary cell changes simultaneously, whether at least one of the foregoing eighth conditions is met, and release the configuration information of the SCG LTM candidate primary secondary cell when it is determined that at least one of the foregoing eighth conditions is met. Therefore, the terminal device may selectively and timely release the configuration information of the SCG LTM candidate primary secondary cell, to reduce a terminal load.

As described above, the feature that a primary secondary cell assists a primary cell in providing a network service is further considered. That is, in a dual-connectivity state, when an LTM change occurs in the primary cell, the primary secondary cell may change adaptively. Therefore, when the another content indicated by the first indication information indicates to release, that is, the first indication information includes the second release indication information corresponding to the to-be-determined configuration information of the SCG LTM candidate primary secondary cell, or includes the second retaining indication information but does not include the second retaining indication information corresponding to the to-be-determined configuration information of the SCG LTM candidate primary secondary cell, it is directly determined to release the configuration information of the SCG LTM candidate primary secondary cell. When it is indicated to retain, that is, the first indication information includes the second retaining indication information corresponding to the to-be-determined configuration information of the SCG LTM candidate primary secondary cell, or includes the second release indication information but does not include the second release indication information corresponding to the to-be-determined configuration information of the SCG LTM candidate primary secondary cell, it is further determined whether the secondary cell group to which the candidate primary secondary cell belongs is the same as the secondary cell group to which the source primary secondary cell belongs, and if the secondary cell group to which the candidate primary secondary cell belongs is the same as the secondary cell group to which the source primary secondary cell belongs, it is determined to release the configuration information of the SCG LTM candidate primary secondary cell.

Optionally, the method further includes: sending third indication information to a network device of a target primary cell, where the third indication information indicates to the network device of the target primary cell that the terminal device has released the configuration information of the SCG LTM candidate primary secondary cell.

In other words, when the primary cell changes simultaneously, if autonomously determining to release the configuration information of the SCG LTM candidate primary secondary cell, the terminal device may send the third indication information to the corresponding network device of the target primary cell based on a connection to the network device of the target primary cell and on a basis of receiving the first indication information sent by the network device of the primary cell. A release state of the configuration information of the SCG LTM candidate primary secondary cell is transferred to the corresponding network device of the target primary cell based on the third indication information. This facilitates configuring the configuration information of the SCG LTM candidate primary secondary cell in time when the network device of the primary cell triggers the LTM mechanism subsequently for the terminal device.

As described above, specific content indicated in the third indication information may be any identifier representing "released", for example, a number, a field, or another form. This is not limited in this application.

With reference to the first aspect, in some implementations of the first aspect, the first indication information is carried in radio resource control RRC reconfiguration information; or the first indication information is carried in CPC configuration information, and the CPC configuration information is carried in radio resource control RRC reconfiguration information.

According to a second aspect, an embodiment of this application provides a method for processing configuration information of a candidate cell. The method may be performed by a network device of a primary cell, or may be performed by a component (for example, a chip or a circuit) configured in the network device of the primary cell. This is not limited in this application.

For example, the method includes: sending first indication information to a terminal device, where the first indication information indicates, to a terminal device, a policy for processing configuration information of an SCG LTM candidate primary secondary cell when a CPC primary secondary cell change occurs.

In other words, how the terminal device retains or releases the configuration information of the SCG LTM candidate primary secondary cell needs to be triggered by the network device of the primary cell. Therefore, the network device of the primary cell sends the first indication information to the terminal device, which can ensure that the terminal device quickly learns the policy for processing the configuration information of the SCG LTM candidate primary secondary cell when the CPC primary secondary cell change occurs, so that the terminal device may retain or release the configuration information of the SCG LTM candidate primary secondary cell in time based on the first indication information, thereby effectively improving timeliness of retaining or releasing the configuration information of the SCG LTM candidate primary secondary cell.

With reference to the second aspect, in some implementations of the second aspect, the first indication information includes at least one of the following:
(1) first retaining indication information corresponding to configuration information of at least one SCG LTM candidate primary secondary cell;
(2) first release indication information corresponding to configuration information of at least one SCG LTM candidate primary secondary cell;
(3) first retaining common indication information corresponding to configuration information of at least one SCG LTM candidate primary secondary cell represented in a form of a secondary cell set; and
(4) first release common indication information corresponding to configuration information of at least one SCG LTM candidate primary secondary cell represented in a form of a secondary cell set.

With reference to the second aspect, in some implementations of the second aspect, the first indication information includes: indication information that the terminal device autonomously processes the configuration information of the SCG LTM candidate primary secondary cell; and a secondary cell group to which each SCG LTM candidate primary secondary cell belongs.

Optionally, the method further includes: receiving second indication information sent by the terminal device, where the second indication information indicates to a network device of a primary cell that the terminal device has released the configuration information of the SCG LTM candidate primary secondary cell.

In other words, when the terminal device autonomously releases the configuration information of the SCG LTM candidate primary secondary cell, the network device of the primary cell needs to learn the release result. Therefore, the network device of the primary cell receives the second indication information formed by the terminal device based on the release result, which helps to learn the release result in time, to collect the configuration information of the SCG LTM candidate primary secondary cell in time in the subsequent LTM mechanism.

With reference to the second aspect, in some implementations of the second aspect, the first indication information further includes: second retaining indication information corresponding to configuration information of at least one SCG LTM candidate primary secondary cell when the primary cell changes simultaneously; or second release indication information corresponding to configuration information of at least one SCG LTM candidate primary secondary cell when the primary cell changes simultaneously.

Optionally, if the first indication information includes indication information that the terminal device autonomously processes the configuration information of the SCG LTM candidate primary secondary cell, the method further includes: receiving third indication information sent by the terminal device, where the third indication information indicates to the network device of the target primary cell that the terminal device has released the configuration information of the SCG LTM candidate primary secondary cell.

In other words, when the primary cell changes simultaneously, and the terminal device autonomously releases the configuration information of the SCG LTM candidate primary secondary cell, the corresponding network device of the target primary cell needs to learn the release result. Therefore, the network device of the target primary cell receives the third indication information formed by the terminal device based on the release result, which helps to learn the release result in time, to obtain the configuration information of the SCG LTM candidate primary secondary cell in time in the subsequent LTM mechanism.

With reference to the second aspect, in some implementations of the second aspect, the first indication information is carried in radio resource control RRC reconfiguration information; or the first indication information is carried in CPC configuration information, and the CPC configuration information is carried in the radio resource control RRC reconfiguration information.

According to a third aspect, an apparatus for processing configuration information of a candidate cell is provided, including modules or units configured to perform the method according to the first aspect and any possible implementation of the first aspect.

According to a fourth aspect, an apparatus for processing configuration information of a candidate cell is provided, including modules or units configured to perform the method according to the second aspect and any possible implementation of the second aspect.

According to a fifth aspect, an apparatus for processing configuration information of a candidate cell is provided, including a processor. The processor is coupled to a memory, and may be configured to execute instructions in the memory, to implement the method according to the first aspect and any possible implementation of the first aspect. Optionally, the apparatus further includes the memory. Optionally, the apparatus further includes a communication interface. The processor is coupled to the communication interface.

In an implementation, the apparatus for processing configuration information of a candidate cell is a terminal device. When the apparatus for processing configuration information of a candidate cell is the terminal device, the communication interface may be a transceiver, or an input/output interface.

In another implementation, the apparatus for processing configuration information of a candidate cell is a chip configured in the terminal device. When the apparatus for processing configuration information of a candidate cell is the chip configured in the terminal device, the communication interface may be an input/output interface.

Optionally, the transceiver may be a transceiver circuit. Optionally, the input/output interface may be an input/output circuit.

According to a sixth aspect, an apparatus for processing configuration information of a candidate cell is provided, including a processor. The processor is coupled to a memory, and may be configured to execute instructions in the memory, to implement the method according to the second aspect and any possible implementation of the second aspect. Optionally, the apparatus further includes the memory. Optionally, the apparatus further includes a communication interface. The processor is coupled to the communication interface.

In an implementation, the apparatus for processing configuration information of a candidate cell is a network device of a primary cell. When the apparatus for processing configuration information of a candidate cell is the network device of the primary cell, the communication interface may be a transceiver, or an input/output interface.

In another implementation, the apparatus for processing configuration information of a candidate cell is a chip configured in the network device of the primary cell. When the apparatus for processing configuration information of a candidate cell is the chip configured in the network device of the primary cell, the communication interface may be an input/output interface.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to receive a signal by using the input circuit, and transmit a signal by using the output circuit, to enable the processor to perform the method of the first aspect and the second aspect, and the method of any possible implementation in the first aspect and the second aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be the same circuit, where the circuit is separately used as the input circuit and the output circuit at different moments. Specific implementations of the processor and various circuits are not limited in the embodiments of this application.

According to an eighth aspect, a processing apparatus is provided, including a processor and a memory. The processor is configured to read instructions stored in the memory, receive a signal by using a receiver, and transmit a signal by using a transmitter, to perform the method of the first aspect and the second aspect, and the method of any possible implementation in the first aspect and the second aspect.

Optionally, there are one or more processors, and there are one or more memories.

Optionally, the memory may be integrated with the processor, or the memory and the processor may be separately disposed.

In a specific implementation process, the memory may be a non-transitory (non-transitory) memory, such as a read-only memory (read only memory, ROM). The memory and the processor may be integrated on a same chip, or may be respectively disposed on different chips. A type of the memory and a manner of disposing the memory and the processor are not limited in the embodiments of this application.

It should be understood that, for a related data interaction process, for example, sending indication information may be a process of outputting indication information from the processor, and receiving capability information may be a process of receiving and inputting capability information by the processor. Specifically, data output by the processor may be output to the transmitter, and input data received by the processor may be from the receiver. The transmitter and the receiver may be collectively referred to as a transceiver.

The processing apparatus in the eighth aspect may be one or more chips. The processor in the processing apparatus may be implemented through hardware or may be implemented through software. When being implemented through hardware, the processor may be a logic circuit, an integrated circuit, or the like; and when being implemented through software, the processor may be a general-purpose processor, and is implemented by reading software code stored in a memory. The memory may be integrated into the processor, or may be located outside the processor and exist independently.

According to a ninth aspect, an embodiment of this application provides a terminal device, including a processor, a memory, and a transceiver, where the transceiver is configured to send and receive data, the memory is configured to store a code instruction, and the processor is configured to run the code instruction. When executing the code instruction stored in the memory, the processor is configured to indicate the terminal device to perform the method according to the first aspect and any possible implementation of the first aspect.

According to a tenth aspect, an embodiment of this application provides a network device of a primary cell, including a processor, a memory, and a transceiver, where the transceiver is configured to send and receive data, the memory is configured to store a code instruction, and the processor is configured to run the code instruction. When executing the code instruction stored in the memory, the processor is configured to indicate the terminal device to perform the method according to the second aspect and any possible implementation of the second aspect.

According to an eleventh aspect, an embodiment of this application provides a computer-readable storage medium, where the computer-readable storage medium stores a computer program or instructions, and when the computer program or the instructions run on a computer, the computer performs the method according to the first aspect to the second aspect and any possible implementation of the first aspect to the second aspect.

According to a twelfth aspect, this application provides a chip or a chip system. The chip or the chip system includes at least one processor and a communication interface. The communication interface and the at least one processor are interconnected through a line. The at least one processor is configured to run a computer program or instructions to perform the method according to the first aspect and any possible implementation of the first aspect. The communication interface in the chip may be an input/output interface, a pin, a circuit, or the like.

According to a thirteenth aspect, an embodiment of this application provides a computer program product including a computer program. The computer program, when runs on a computer, causes the computer to perform the method of the first aspect and the second aspect, and the method of any possible implementation in the first aspect and the second aspect.

In a possible implementation, the chip or the chip system described above in this application further includes at least one memory, and the at least one memory stores instructions. The memory may be a storage unit, for example, a register or a cache, inside the chip, or may be a storage unit (for example, a read-only memory or a random access memory) of the chip.

It should be understood that the third aspect, the fifth aspect, and the ninth aspect of this application correspond to the technical solutions of the first aspect of this application; the fourth aspect, the sixth aspect, and the tenth aspect of this application correspond to the technical solutions of the second aspect of this application; and the seventh aspect, the eighth aspect, and the eleventh aspect to the thirteenth aspect of this application correspond to the technical solutions of the first aspect and the second aspect of this application. Beneficial effects obtained in the aspects and corresponding feasible implementations are similar, and details are not described again.

### BRIEF DESCRIPTION OF DRAWINGS

FIG. 1 is a schematic diagram of an architecture of a communication system 100 to which the embodiments of this application are applied;
FIG. 1A-1 and FIG. 1A-2 are a diagram of an example of signaling interaction between a terminal device and each network device in a CPC procedure;
FIG. 1B is a diagram of an example of signaling interaction between a terminal device and each network device in an SCG LTM procedure;
FIG. 1C is a diagram of an example of signaling interaction between a terminal device and each network device in a CHO procedure;
FIG. 2 is a schematic flowchart of a method 200 for processing configuration information of a candidate cell according to an embodiment of this application from a perspective of device interaction;
FIG. 3 is a diagram of signaling interaction between a terminal device and each network device when only a CPC occurs and a network device of a primary cell makes a decision in an embodiment of this application from a perspective of device interaction;
FIG. 4 is a diagram of signaling interaction between a terminal device and each network device when only a CPC occurs and a terminal device makes a decision in an embodiment of this application from a perspective of device interaction;
FIG. 5A and FIG. 5B are a diagram of signaling interaction between a terminal device and each network device when a CPC occurs, the primary cell changes simultaneously, and a network device of a primary cell makes a decision in an embodiment of this application from a perspective of device interaction;
FIG. 6A and FIG. 6B are a diagram of signaling interaction between a terminal device and each network device when a CPC occurs, a primary cell changes simultaneously, and a terminal device makes a decision in an embodiment of this application from a perspective of device interaction;
FIG. 7 is a schematic block diagram of an apparatus 10 for processing configuration information of a candidate cell according to an embodiment of this application;
FIG. 8 is a schematic diagram of a possible structure of a terminal device 3000 according to an embodiment of this application; and
FIG. 9 is a schematic diagram of a possible structure of a network device 4000 of a primary cell according to an embodiment of this application.

### DESCRIPTION OF EMBODIMENTS

To facilitate understanding of a method for processing configuration information of a candidate cell, a device, a storage medium, and a product provided in embodiments of this application, the following describes the method for processing configuration information of a candidate cell, and a system architecture and an application scenario thereof provided in the embodiments of this application. It may be understood that the system architecture and the application scenario described in the embodiments of this application are to illustrate the technical solutions of the embodiments of this application more clearly, and do not constitute a limitation on the technical solutions provided in the embodiments of this application.

The technical solutions in the embodiments of this application may be applied to dual-connectivity communication scenarios in various communication systems, for example, a long term evolution (Long Term Evolution, LTE) system, an LTE frequency division duplex (Frequency Division Duplex, FDD) system, LTE time division duplex (Time Division Duplex, TDD), a universal mobile telecommunication system (Universal Mobile Telecommunication System, UMTS), a worldwide interoperability for microwave access (Worldwide Interoperability for Microwave Access, WiMAX) communication system, a future 5th generation (5th Generation, 5G) communication system or a new radio access technology (new radio Access Technology, NR), and vehicle-to-X (vehicle-to-X, V2X), where the V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, long term evolution-vehicle (Long Term Evolution-Vehicle, LTE-V), Internet of vehicles, machine type communication (machine type communication, MTC), Internet of things (Internet of Things, IoT), long term evolution-machine (Long Term Evolution-Machine, LTE-M), machine to machine (Machine to Machine, M2M), and the like.

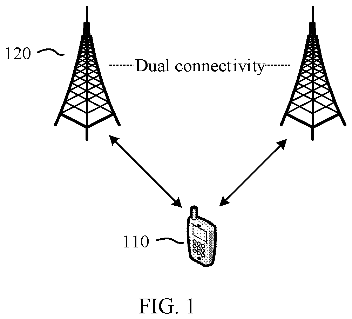

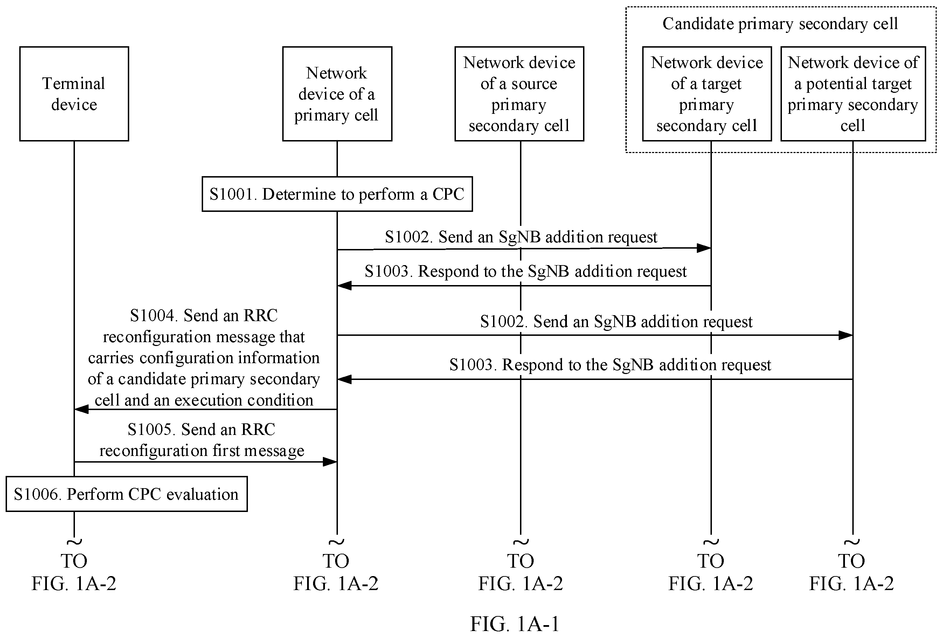

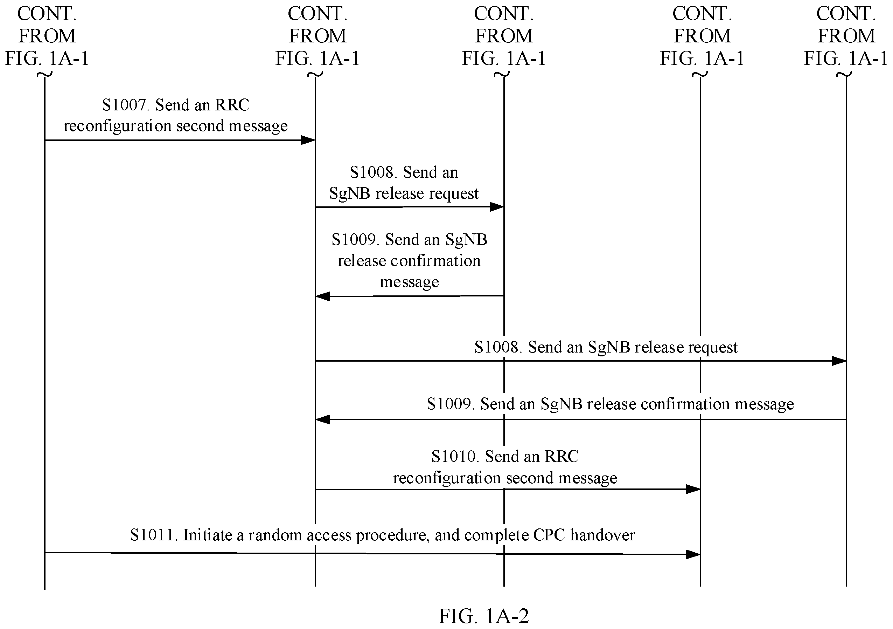

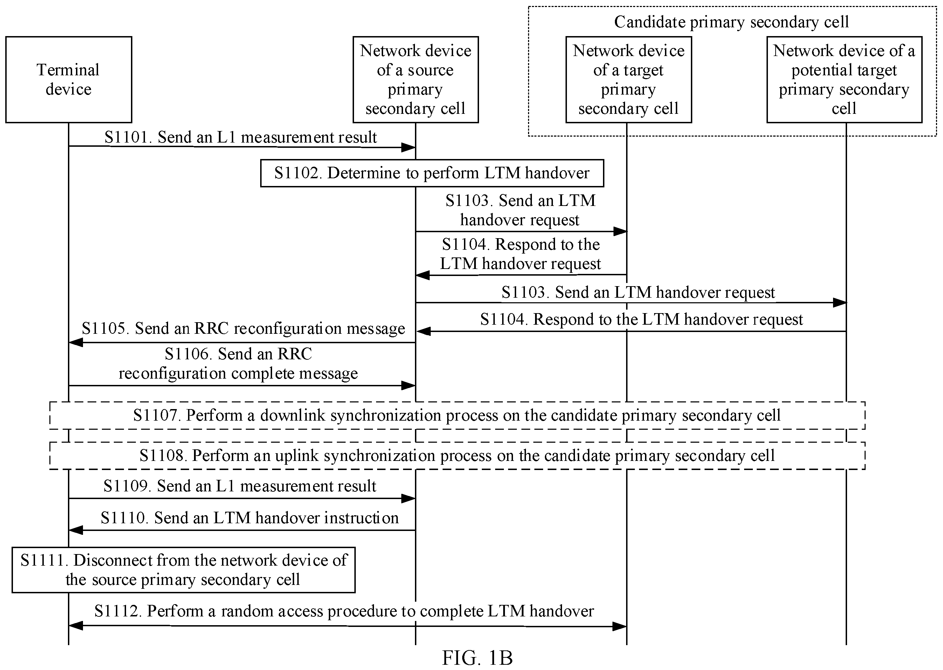

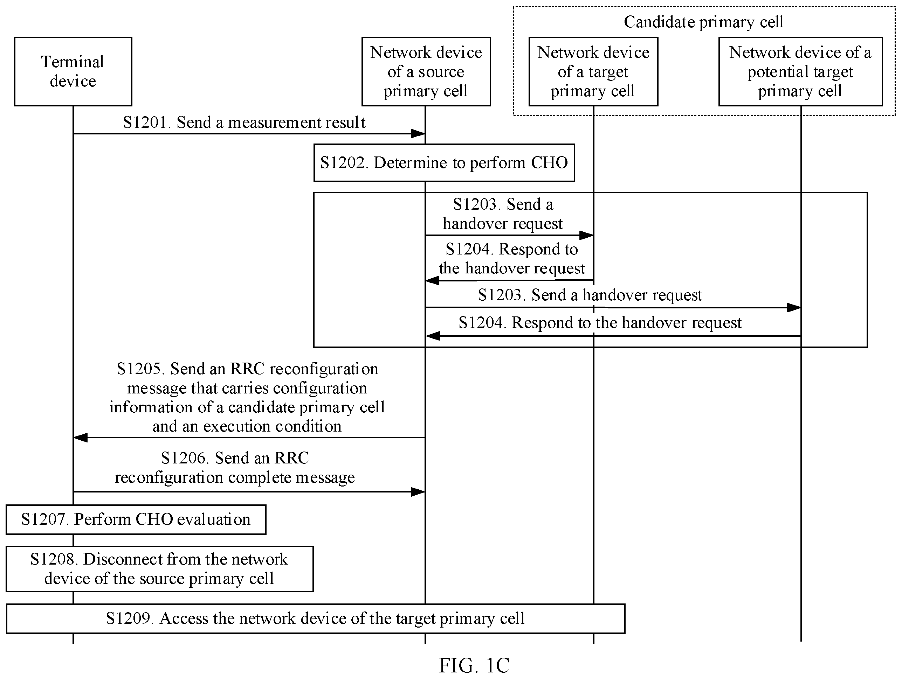

For ease of understanding the embodiments of this application, a communication system applicable to the embodiments of this application is first described in detail with reference to FIG. 1. FIG. 1 is a schematic diagram of an architecture of a communication system 100 to which the embodiments of this application are applied. As shown in FIG. 1, in a dual-connectivity state, the communication system 100 may include at least one terminal device, for example, a terminal device 110 shown in FIG. 1, and may further include at least one network device of a primary cell, for example, a network device 120 of a primary cell shown in FIG. 1. The terminal device 110 may be mobile or fixed. The network device 120 of the primary cell is a device, such as a base station or a base station controller, that may communicate with the terminal device 110 through a wireless link. The network device 120 of the primary cell may provide communication coverage for a specific geographical area, and may communicate with a terminal device that is located in the covered area (cell).

FIG. 1 shows examples of a terminal device and a network device of a primary cell. Optionally, the communication system 100 may include at least one network device of a primary cell, and may further include at least one network device of a primary secondary cell. In addition, in a coverage area of the network device of the primary cell and the network device of the primary secondary cell, another quantity of terminal devices may be included. This is not limited in the embodiments of this application.

A plurality of antennas may be configured for each of the foregoing communication devices, for example, the terminal device 110 and the network device 120 of the primary cell in FIG. 1. The plurality of antennas may include at least one transmit antenna configured to send a signal and at least one receiving antenna configured to receive a signal. In addition, each communication device further additionally includes a transmitter chain and a receiver chain. A person of ordinary skill in the art may understand that each communication device may include a plurality of components (such as a processor, a modulator, a multiplexer, a demodulator, a demultiplexer, or an antenna) related to signal sending and receiving. Therefore, the network device of the primary cell may communicate with the terminal device by using a multi-antenna technology.

Optionally, the wireless communication system 100 may further include other network entities such as a network controller and a mobility management entity. This is not limited in the embodiments of this application.

In the embodiments of this application, the network device may be any device having a wireless transceiver function. The device includes, but is not limited to: an evolved NodeB (evolved Node B, eNB), a radio network controller (Radio Network Controller, RNC), a NodeB (Node B, NB), a base station controller (Base Station Controller, BSC), a base transceiver station (Base Transceiver Station, BTS), a home base station (for example, Home evolved NodeB, or Home Node B, HNB), a baseband unit (BaseBand Unit, BBU), an access point (Access Point, AP) in a wireless fidelity (Wireless Fidelity, WIFI) system, a wireless relay node, a wireless backhaul node, a transmission point (transmission point, TP), a transmission and reception point (transmission and reception point, TRP), or the like. The device may alternatively be a gNB or a transmission point (TRP or TP) in a 5G system, for example, an NR system, one antenna panel or one group of antenna panels (including a plurality of antenna panels) of a base station in the 5G system, or a network node constituting a gNB or a transmission point, such as a baseband unit (BBU) or a distributed unit (distributed unit, DU).

In some deployments, the gNB may include a centralized unit (centralized unit, CU) and the DU. The gNB may further include an active antenna unit (active antenna unit, AAU). The CU implements a part of functions of the gNB, and the DU implements a part of functions of the gNB. For example, the CU is responsible for processing a non-real-time protocol and service, and implementing functions at radio resource control (radio resource control, RRC) and packet data convergence protocol (packet data convergence protocol, PDCP) layers. The DU is responsible for processing a physical layer protocol and real-time service, and implementing a function at radio link control (radio link control, RLC), media access control (media access control, MAC), and physical (physical, PHY) layers. The AAU implements some physical layer processing functions and related functions of radio frequency processing and an active antenna. Information of the RRC layer eventually becomes information of the PHY layer, or is obtained by converting information of the PHY layer. Therefore, in this architecture, higher layer signaling such as RRC layer signaling may be considered as being sent by the DU or sent by the DU and the AAU. It may be understood that the network device of the primary cell may be a device including one or more of a CU node, a DU node, and an AAU node. In addition, the CU may be classified as a network device in a radio access network (radio access network, RAN), or the CU may be classified as a network device in a core network (core network, CN). This is not limited in this application.

The network device provides a service for a cell, and the terminal device communicates with the cell by using a transmission resource (for example, a frequency domain resource or a spectrum resource) allocated by the network device. The cell may belong to a macro base station (for example, macro eNB or macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing high-speed data transmission services.

In the embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in the embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an in-vehicle device, a wearable device, a terminal device in a 5G network or a terminal device in a future evolved public land mobile network (public land mobile network, PLMN), and the like.

The wearable device may also be referred to as a wearable smart device, and is a generic term for wearable devices such as glasses, gloves, watches, clothing, and shoes that are intelligently designed and developed for daily wear by using wearable technologies. The wearable device is a portable device that is directly worn on a human body or integrated into clothing or an accessory of a user. The wearable device is not merely a hardware device, but also implements powerful functions through software support, data exchange, and cloud interaction. Generalized wearable intelligent devices include full-function and large-size devices that can implement all or some functions without depending on smartphones, for example, smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (internet of things, IoT) system. The IoT is an important part of development of information technology in the future. A main technical feature of the IoT is that an object is connected to a network by using a communication technology, to implement an intelligent network for human-machine interconnection and thing-thing interconnection.

A specific form of the terminal device is not limited in this application.

To facilitate understanding of the embodiments of this application, terms involved in this application are first briefly described.
1. Dual connectivity: To ensure quality of a network service of a terminal device, a method in which a primary secondary cell in a secondary cell group assists a primary cell in a primary cell group is used to provide the network service for the terminal device, so that the terminal device is connected to two network devices simultaneously, that is, dual connectivity.
2. Primary cell group: In a dual-connectivity state, the primary cell group is a group including at least one primary cell and having a control connection to the core network.
3. Primary cell: In a dual-connectivity state, the primary cell is a cell belonging to a primary cell group, and is configured to initiate initial access.
4. Secondary cell group: In a dual-connectivity state, the secondary cell group is a group including a primary secondary cell and at least one secondary cell, and the secondary cell group may have a control connection to the core network, or may not have a control connection to the core network.
5. Primary secondary cell: In a dual-connectivity state, the primary secondary cell is a cell belonging to a secondary cell group, and is configured to perform initial access in the secondary cell group.

It should be noted that, for different primary cells or different primary secondary cells, a cell may be an area within coverage of a wireless network of a corresponding network device. In the embodiments of this application, different cells may correspond to a same or different network devices. For example, a network device to which cell #1 belongs and a network device to which cell #2 belongs may be different network devices, for example, base stations. In other words, cell #1 and cell #2 may be managed by different base stations. Alternatively, for another example, a network device that manages cell #1 and a network device that manages cell #2 may be different radio frequency processing units of a same base station, for example, a radio remote unit (radio remote unit, RRU). In other words, cell #1 and cell #2 may be managed by a same base station, and have a same baseband processing unit and a same intermediate frequency processing unit, but have different radio frequency processing units. Alternatively, for still another example, a network device to which cell #1 belongs and a network device to which cell #2 belongs may be a same network device, for example, a base station. In other words, cell #1 and cell #2 may be managed by a same base station. In this case, it may be referred to as that cell #1 and cell #2 are co-sited. This is not specifically limited in this application.

As described above, in some possible deployments, the gNB may include a CU and a DU. In this deployment, cell #1 and cell #2 may be managed by a same CU and a same DU, that is, share a CU and share a DU; cell #1 and cell #2 may be managed by a same CU and different DUs, that is, share a CU but do not share a DU; and cell #1 and cell #2 may also be managed by different CUs and different DUs, that is, do not share a CU and do not share a DU.

6. Conditional primary secondary cell change: That is, CPC, referring to a process in which a terminal device is in a dual-connectivity state, is triggered to be handed over from a current primary secondary cell to a candidate primary secondary cell due to a change in service conditions or channel quality.

FIG. 1A-1 and FIG. 1A-2 are a diagram of an example of signaling interaction between a terminal device and each network device in a CPC procedure. With reference to FIG. 1A-1 and FIG. 1A-2, the following briefly describes the CPC procedure. The CPC procedure may specifically include S1001 to S1011 in the following.

S1001. A network device of a primary cell determines to perform a CPC.

S1002. The network device of the primary cell sends an SgNB (Secondary gNodeB, secondary node base station) addition request to a network device of a candidate primary secondary cell. The candidate primary secondary cell includes a target primary secondary cell and a potential target primary secondary cell.

S1003. The network device of the candidate primary secondary cell responds to the SgNB addition request based on configuration information of the candidate primary secondary cell and an execution condition. There are one or more candidate primary secondary cells.

S1004. The network device of the primary cell sends the configuration information of the candidate primary secondary cell and the execution condition to a terminal device by using an RRC reconfiguration message.

S1005. The terminal device sends an RRC reconfiguration first message to the network device of the primary cell. The RRC reconfiguration first message indicates to the network device of the primary cell that the terminal device completes RRC reconfiguration.

S1006. The terminal device evaluates the configuration information of the candidate primary secondary cell and the execution condition, to determine a target primary secondary cell.

S1007. The terminal device sends an RRC reconfiguration second message to the network device of the primary cell. The RRC reconfiguration second message indicates to the network device of the primary cell that the terminal device determines the target primary secondary cell.

S1008. The network device of the primary cell sends an SgNB release request to a network device of a source primary secondary cell and a network device of the potential target primary secondary cell.

S1009. The network device of the source primary secondary cell and the network device of the potential target primary secondary cell send an SgNB release confirmation message to the network device of the primary cell.

S1010. The network device of the primary cell sends an RRC reconfiguration second message to the network device of the target primary secondary cell.

S1011. The terminal device initiates a random access procedure to the network device of the target primary secondary cell, and thus the CPC procedure is completed.

The execution condition may be any one of event A3, event A4, and event A5, or may be any two of event A3, event A4, and event A5, or may be event A3, event A4, and event A5. Event A3 is that quality of a neighboring cell is better than that of a source cell, and occurrence of the event may trigger a handover. Event A4 is that quality of a neighboring cell is greater than an absolute threshold, and occurrence of the event may trigger a handover. Event A5 is that quality of a source cell is less than an absolute threshold, and quality of a neighboring cell is greater than an absolute threshold. Occurrence of the event may trigger a handover.

It should be understood that execution conditions used by different candidate primary secondary cells may be the same or different. This is not limited in this application.

7. Secondary cell group layer1/2 triggered mobility: That is, SCG LTM, referring to a process in which when a terminal device is in a connection state, a network device of a source cell performs cell handover on the terminal device based on an L1 measurement result reported by the terminal device and based on a support capability of the terminal device for LTM.

FIG. 1B is a diagram of an example of signaling interaction between a terminal device and each network device in an SCG LTM procedure. With reference to FIG. 1B, the following briefly describes the SCG LTM procedure. The SCG LTM procedure may specifically include S1101 to S1112 in the following.

S1101. A terminal device sends an L1 measurement result to a network device of a source primary secondary cell.

S1102. The network device of the source primary secondary cell determines to perform LTM handover.

S1103. The network device of the source primary secondary cell sends an LTM handover request to a network device of a candidate primary secondary cell. The candidate primary secondary cell includes a target primary secondary cell and a potential target primary secondary cell.

S1104. The network device of the candidate primary secondary cell responds to the LTM handover request of the network device of the source primary secondary cell based on configuration information of the candidate primary secondary cell.

S1105. The network device of the source primary secondary cell sends an RRC reconfiguration message to the terminal device. The RRC reconfiguration message includes the configuration information of the candidate primary secondary cell. The RRC reconfiguration message indicates the terminal device to perform an uplink synchronization process and a downlink synchronization process on the candidate primary secondary cell.

S1106. The terminal device sends an RRC reconfiguration complete message to the network device of the source primary secondary cell.

S1107. The terminal device performs the downlink synchronization process on the candidate primary secondary cell.

S1108. The terminal device performs the uplink synchronization process on the candidate primary secondary cell.

S1109. The terminal device sends the L1 measurement result to the network device of the source primary secondary cell, so that the network device of the source primary secondary cell determines the target primary secondary cell.

S1110. The network device of the source primary secondary cell sends an LTM handover instruction to the terminal device.

S1111. The terminal device disconnects from the network device of the source primary secondary cell.

S1112. The terminal device performs a random access procedure on a network device of the target primary secondary cell, to complete LTM handover.

The LTM handover instruction may include MAC CE indication information, and the MAC CE indication information may include: a timing advance TA, a transmission configuration indicator TCIstate id, random access procedure CFRA resource information, and a configuration information identifier of a candidate cell.

It should be understood that when the timing advance TA is valid, a specific value of the timing advance TA may be included in the MAC CE indication information. When the timing advance TA is invalid, the specific value of the timing advance TA may not be included in the MAC CE indication information.

It should be further understood that, if the MAC CE indication information includes the specific value of the timing advance TA, the terminal device may implement handover by sending one piece of uplink signaling, one uplink data packet, or other uplink information to a network device of a target cell. Specific content to be sent is not limited in this application. If the MAC CE indication information does not include the specific value of the timing advance TA, the terminal device may autonomously measure a timing advance TA corresponding to the network device of the target cell, and may send one piece of uplink signaling, one uplink data packet, or other uplink information to the network device of the target cell based on a measurement result, to implement handover. Specific content to be sent is not limited in this application.

8. Conditional handover: That is, CHO, referring to a process in which a terminal device is in a dual-connectivity state, and is triggered to be handed over from a current primary cell to a candidate primary cell due to a change in service conditions or channel quality.

FIG. 1C is a diagram of an example of signaling interaction between a terminal device and each network device in a CHO procedure. With reference to FIG. 1C, the following briefly describes the CHO procedure. The CHO procedure may specifically include S1201 to S1209 in the following.

S1201. A terminal device sends a measurement result to a network device of a source primary cell.

S1202. The network device of the source primary cell determines, based on the measurement result, to perform CHO.

S1203. The network device of the source primary cell sends a handover request to a network device of a candidate primary cell. The candidate primary cell includes a target primary cell and a target potential primary cell.

S1204. The network device of the candidate primary cell responds to the handover request of the network device of the source primary cell based on configuration information of the candidate primary cell and an execution condition.

S1205. The network device of the source primary cell sends the configuration information of the candidate primary cell and the execution condition to the terminal device by using an RRC reconfiguration message.

S1206. The terminal device sends an RRC reconfiguration complete message to the network device of the source primary cell.

S1207. The terminal device performs CHO evaluation based on the configuration information of the candidate primary cell and the execution condition, to determine the target primary cell.

S1208. The terminal device disconnects from the network device of the source primary cell.

S1209. The terminal device accesses the network device of the target primary cell, and thus the CHO procedure is completed.

Configuration information of a CHO execution condition may be any one of event A3, event A4, and event A5, or may be any two of event A3, event A4, and event A5, or may be event A3, event A4, and event A5. Event A3 is that quality of a neighboring cell is better than that of a source cell, and occurrence of the event may trigger a handover. Event A4 is that quality of a neighboring cell is greater than an absolute threshold, and occurrence of the event may trigger a handover. Event A5 is that quality of a source cell is less than an absolute threshold, and quality of a neighboring cell is greater than an absolute threshold. Occurrence of the event may trigger a handover.

It should be understood that the configuration information of the CHO execution condition used by different candidate primary secondary cells may be the same or different. This is not limited in this application.

9. Release: In the dual-connectivity state, the terminal device needs to be configured with both CPC configuration information and LTM configuration information, and when the CPC procedure is triggered, to reduce an operating load of the terminal device, it is expected that the terminal device can unconfigure the LTM configuration information, that is, release the LTM configuration information.

10. Retain: In the dual-connectivity state, the terminal device needs to be configured with both the CPC configuration information and the LTM configuration information, and when the LTM procedure may be triggered later, to reduce a latency problem caused by sending the LTM configuration information again, it is expected that the terminal device can continue to store the LTM configuration information, that is, retain the LTM configuration information.

It should be understood that the CPC configuration information and the LTM configuration information are CPC configuration information and LTM configuration information of the candidate cell. In a same CPC procedure, release or retaining of different candidate cells may be the same or different. This is not limited in this application.

The following describes the technical solutions in the embodiments of this application with reference to the accompanying drawings in the embodiments of this application.

For ease of understanding of the embodiments of this application, the following descriptions are first provided.

First, for ease of clearly describing the technical solutions in the embodiments of this application, in the embodiments of this application, words such as "first" and "second" are used to distinguish same items or similar items whose functions and roles are basically the same. For example, first retaining indication information and second retaining indication information are merely used to distinguish between different retaining indication information, but not used to limit a sequence thereof. A person skilled in the art may understand that the words such as "first" and "second" do not limit a quantity or an execution order, and the words such as "first" and "second" do not indicate a definite difference.

Second, in the embodiments of this application, terms such as "exemplary" or "for example" indicates an example, an instance, or a description. Any embodiment or design solution described as "exemplary" or "for example" in this application should not be construed as being preferred or advantageous over another embodiment or design solution. To be precise, the use of the term such as "exemplary" or "for example" is intended to present a related concept in a specific manner.

Third, in the embodiments of this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Fourth, in the embodiments of this application, "when...", "in a case that...", and "if" all mean that an apparatus may perform corresponding processing in an objective situation. This is not limited in time, does not require a determining action to be performed by the apparatus when implementing the processing, and does not mean that another limitation exists.

Fifth, "simultaneous" in the embodiments of this application may be understood as being at a same time point, or may be understood as being within a period of time, or may be understood as being within a same period, which may be specifically understood with reference to a context.

Sixth, in the embodiments of this application, "B corresponding to A" indicates that B is associated with A. "Perform B based on A" does not mean performing B only based on A, and B may alternatively be performed based on A and/or other information.

Seventh, "predefined" or "pre-configured" may be implemented by pre-storing corresponding code, tables, or other forms that may indicate related information in devices (for example, including a terminal device and a network device), and a specific implementation thereof is not limited in this application. "Store" may refer to being stored in one or more memories. The one or more memories may be separately disposed, or may be integrated into an encoder or a decoder, a processor, or an apparatus for processing configuration information of a candidate cell. Alternatively, a part of the one or more memories may be separately disposed, and a part of the memories may be integrated into a decoder, a processor, or an apparatus for processing configuration information of a candidate cell. A type of the memory may be any form of storage medium. This is not limited in this application.

The pre-defined in this application may be understood as definition, pre-definition, storage, pre-storage, pre-negotiation, pre-configuration, curing, or pre-burning.

Eighth, in the embodiments of this application, "indication" may include a direct indication and an indirect indication, or may include an explicit indication and an implicit indication. Information indicated by a specific piece of information is referred to as to-be-indicated information, and during specific implementation, the to-be-indicated information may be indicated in a plurality of manners, for example, but not limited to, the to-be-indicated information may be directly indicated, for example, the to-be-indicated information itself or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and another part of the to-be-indicated information is known or specified in advance. For example, the to-be-indicated information may be indicated by using a pre-agreement (for example, an agreement provision) on whether a specific cell exists, to reduce indication overheads to some extent.

Ninth, the following describes a plurality of embodiments in detail with reference to a plurality of flowcharts. However, it should be understood that related descriptions of these flowcharts and corresponding embodiments are merely examples for ease of understanding, and should not constitute any limitation on this application. Every step in each flowchart does not necessarily have to be performed. For example, some steps can be skipped. In addition, an execution sequence of the steps is not fixed, and is not limited to that shown in the figure. The execution sequence of the steps should be determined based on functions and internal logic of the steps.

In the dual-connectivity state, the terminal device may inevitably involve a change of a primary secondary cell and/or a primary cell. Currently, a notable topic is: during a CPC change, for a terminal device that stores both configuration information of an SCG LTM candidate cell and configuration information of a CPC candidate cell, how to properly process the configuration information of the SCG LTM candidate cell during the change. In this case, a manner is proposed currently, that is, after the CPC change is performed, an indication of retaining or releasing the configuration information of the SCG LTM candidate cell is manually triggered through a network side, to send the indication to the terminal device, and the terminal device retains or releases the configuration information of the SCG LTM candidate cell based on the indication. As a result, timeliness of retaining or release is low, thereby increasing a load of the terminal device, and causing an additional waste of resources and latency overheads. Therefore, an embodiment of this application provides a method for processing configuration information of a candidate cell, and a main inventive idea of the method is as follows.

To improve timeliness of retaining or release, the indication of retaining or releasing the configuration information of the SCG LTM candidate cell is not manually triggered through the network side after the CPC change is performed, but before the terminal device performs the CPC change, the network device of the primary cell indicates, by using indication information, a processing policy for the configuration information of the SCG LTM candidate cell, so that when it is determined to perform the conditional CPC cell change, the terminal device may automatically retain or release the configuration information of the SCG LTM candidate cell according to the processing policy. In this way, the configuration information of the SCG LTM candidate primary secondary cell is effectively managed, and timeliness of retaining or release is improved, to reduce the load of the terminal device, and avoid the additional waste of resources and latency overheads.

The following describes in detail the method provided in the embodiments of this application with reference to the accompanying drawings.

It should be understood that the following is merely for ease of understanding and description. Interaction between a terminal device and a network device is used as an example to describe in detail the method provided in the embodiments of this application. However, this shall not constitute any limitation on an execution body of the method provided in this application. For example, the terminal device shown in the following embodiment may be replaced with a component (for example, a chip or a circuit) configured in the terminal device. The network device shown in the following embodiment may also be replaced with a component (for example, a chip or a circuit) configured in the network device.

A specific structure of an execution body of the method provided in the embodiments of this application is not specifically limited in the embodiments shown below, provided that a program that records code of the method provided in the embodiments of this application can be run to perform communication according to the method provided in the embodiments of this application. For example, the method provided in the embodiments of this application may be performed by the terminal device or the network device, or a functional module in the terminal device or the network device that can invoke and execute the program.

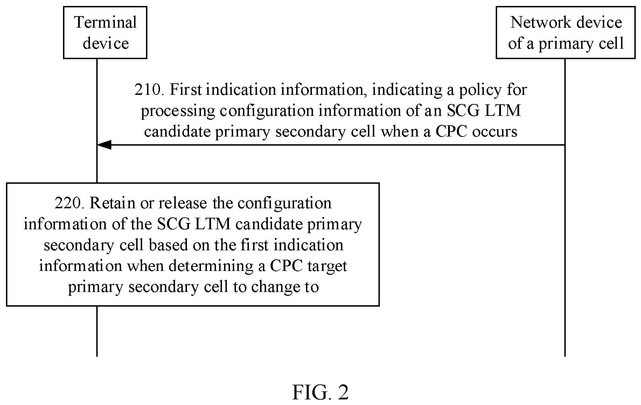

FIG. 2 is a schematic flowchart of a method 200 for processing configuration information of a candidate cell according to an embodiment of this application from a perspective of device interaction. As shown in FIG. 2, the method 200 may include step 210 to step 220. The steps in the method 200 are described in detail below.

In step 210, a network device of a primary cell sends first indication information to a terminal device, where the first indication information indicates, to the terminal device, a policy for processing configuration information of an SCG LTM candidate primary secondary cell when a conditional primary secondary cell change CPC occurs; and
It should be noted that, a manner in which the first indication information indicates, to the terminal device, the policy for processing the configuration information of the SCG LTM candidate primary secondary cell when the CPC occurs is not limited. The following describes the manner in which the first indication information indicates, to the terminal device, the policy for processing the configuration information of the SCG LTM candidate primary secondary cell when the CPC occurs.

In an example, the first indication information may include information about a device controlling a processing manner, and information required when the device indicates the terminal to process the configuration information of the SCG LTM candidate primary secondary cell. In this manner, the policy for processing the configuration information of the SCG LTM candidate primary secondary cell may be more clearly indicated.

In another example, only information required for processing may be included. Because different devices controlling the processing manner correspond to different information required for processing, the device controlling the processing manner and the specific processing manner may be determined based on a type of the information required for processing. In this manner, transmission resources can be effectively saved.

In still another example, if the device controlling the processing manner is a network device, the first indication information may include only information required for performing processing, and if the device controlling the processing manner is a terminal device, the first indication information includes not only device information for controlling the processing manner, but also information required for processing by the device. On the contrary, in yet still another example, if the device controlling the processing manner is a network device, the first indication information may include not only device information for controlling the processing manner, but also information required for processing, and if the device controlling the processing manner is a terminal device, the first indication information may include only the information required for processing. The two manners may enable the indication information to be more flexible.

The information required for processing may vary based on the device controlling the processing manner. For example, when the device controlling the processing manner is a network device of a primary cell, information required for processing may include information about a processing manner of the configuration information of the SCG LTM candidate primary secondary cell or other information. When the device controlling the processing manner is a terminal device, information required for processing may include information related to the SCG LTM candidate primary secondary cell or other information.

It should be understood that the foregoing listed specific manners of indicating the terminal device to determine the policy for processing the configuration information of the SCG LTM candidate primary secondary cell when the CPC occurs are merely examples, and should not constitute any limitation on this application. A specific manner of how the network device indicates the terminal device to determine the policy for processing the configuration information of the SCG LTM candidate primary secondary cell when the CPC occurs is not limited in this application.

It should be understood that the first indication information may be irrelevant or relevant to a CPC target primary secondary cell to change to.

In an example, regardless of which CPC target primary secondary cell is, the configuration information of the SCG LTM candidate primary secondary cell may be processed based on the same first indication information. In this manner, unified first indication information may be transmitted when the first indication information is transmitted. Therefore, transmission resources can be effectively saved.

In another example, corresponding first indication information may be associated for each CPC candidate primary secondary cell. That is, when different CPC primary secondary cells are used as CPC target primary secondary cells, indication information associated with different CPC primary secondary cells may be different from each other. Therefore, for different CPC target primary secondary cells, policies for processing the configuration information of the SCG LTM candidate primary secondary cell may also be different. In this manner, the configuration information of the SCG LTM candidate primary secondary cell can be managed in a more refined manner.

The following describes a transmission manner of the first indication information.

For example, the first indication information may be carried in radio resource control RRC reconfiguration information. Specifically, when the configuration information of the CPC candidate primary secondary cell is sent to the terminal device by using the RRC reconfiguration information, it can be sent to the terminal device together with the first indication information. In this case, the first indication information may be a predefined field in the RRC reconfiguration information. The CPC configuration information includes configuration information of a candidate primary secondary cell and configuration information of a CPC execution condition, and there may be one or more candidate primary secondary cells.

For another example, the first indication information may be carried in the CPC configuration information, and the configuration information of the CPC candidate primary secondary cell is carried in the radio resource control RRC reconfiguration information. Specifically, the first indication information is associated with corresponding configuration information of a CPC candidate primary secondary cell for storage, a predefined field in the configuration information of the CPC candidate primary secondary cell indicates the first indication information, and then, the configuration information of the CPC candidate primary secondary cell is indicated by using a defined field in the RRC reconfiguration information.

For still another example, the first indication information may be sent to the terminal device as a piece of independent signaling by using the network device of the primary cell, and is sent to the terminal device together with the RRC reconfiguration information. "Being sent together with" may refer to a time point or a time period. This is not limited in this application.

It should be understood that the network device of the primary cell may further send an execution condition of the CPC candidate primary secondary cell. The execution condition may be any one of event A3, event A4, and event A5, or may be any two of event A3, event A4, and event A5, or may be event A3, event A4, and event A5. Event A3 is that quality of a neighboring cell is better than that of a source cell, and occurrence of the event may trigger a handover. Event A4 is that quality of a neighboring cell is greater than an absolute threshold, and occurrence of the event may trigger a handover. Event A5 is that quality of a source cell is less than an absolute threshold, and quality of a neighboring cell is greater than an absolute threshold. Occurrence of the event may trigger a handover.

It should be further understood that, in the foregoing example, CPC execution conditions used by different candidate primary secondary cells may be the same or different. This is not limited in this application.

In step 220, the terminal device retains or releases the configuration information of the SCG LTM candidate primary secondary cell based on the first indication information when determining a CPC target primary secondary cell to change to.

In other words, a prerequisite for retaining or releasing the configuration information of the SCG LTM candidate primary secondary cell is that the CPC target primary secondary cell to change to is determined by the terminal device. The CPC target primary secondary cell is a primary secondary cell to finally hand over to during the CPC process. The following briefly describes steps in which the terminal device determines the CPC target primary secondary cell.

That is, the terminal device obtains, from the RRC reconfiguration information, configuration information of a CPC candidate primary secondary cell and an execution condition corresponding to each candidate primary secondary cell, and makes a CPC decision based on the configuration information of the CPC candidate primary secondary cell and the execution condition. For example, it is determined whether quality of a current candidate primary secondary cell is better than that of a source primary secondary cell, and if the quality of the current candidate primary secondary cell is better than that of the source primary secondary cell, a handover is triggered. Alternatively, it is determined whether the quality of the current candidate primary secondary cell is greater than an absolute threshold, and if the quality of the current candidate primary secondary cell is greater than the absolute threshold, a handover is triggered. Alternatively, it is determined whether the quality of the current candidate primary secondary cell is less than an absolute threshold and is greater than another absolute threshold, and if the quality of the current candidate primary secondary cell is less than the absolute threshold and is greater than the another absolute threshold, a handover is triggered. Therefore, candidate primary secondary cells that currently meet the corresponding CPC execution condition are determined, and a candidate primary secondary cell is selected from the candidate primary secondary cells that meet the condition as the CPC target primary secondary cell.

It should be understood that CPC execution conditions used by different candidate primary secondary cells may be the same or different. Therefore, one or more of the foregoing determining types may be performed in one CPC process. This is not limited in this application.

Therefore, before the CPC occurs, the method for processing configuration information of a candidate cell provided in this embodiment of this application has provided a processing policy of retaining or releasing the configuration information of the SCG LTM candidate primary secondary cell for the terminal device, that is, the first indication information. The terminal device may retain or release the configuration information of the SCG LTM candidate primary secondary cell based on the first indication information when determining a CPC target primary secondary cell to change to.

Therefore, before the CPC occurs, the technical solutions provided in this application has provided indication information of the processing policy of retaining or releasing the configuration information of the SCG LTM candidate primary secondary cell for the terminal device. In this case, when the CPC target primary secondary cell to change to is determined, the configuration information of the SCG LTM candidate primary secondary cell may be retained or released in time based on the first indication information, without determining to retain or release the configuration information of the SCG LTM candidate primary secondary cell after the CPC occurs. Alternatively, retaining or release is further performed based on a manual instruction. This effectively improves timeliness of retaining or releasing the configuration information of the SCG LTM candidate primary secondary cell.

In the method of this application, as shown in FIG. 1A-1, FIG. 1A-2, and FIG. 1C, in the dual-connectivity state of the terminal device, when the network device of the primary cell determines to perform a CPC, and obtains configuration information of a CPC candidate cell and an execution condition from the candidate primary secondary cell, there is a possible case in which the primary cell also determines to perform CHO. Therefore, when the indication information indicates the policy for processing the configuration information of the SCG LTM candidate primary secondary cell when a CPC occurs, two scenarios are involved. A first scenario is a policy for processing the configuration information of the SCG LTM candidate primary secondary cell when only a CPC occurs. A second scenario is that a primary cell changes simultaneously based on the case that a CPC occurs. Therefore, when indicating, to the terminal device, the policy for processing the configuration information of the SCG LTM candidate primary secondary cell when a CPC occurs, the first indication information may indicate the policy for processing the configuration information of the SCG LTM candidate primary secondary cell when only a CPC occurs, or indicate, to the terminal device, a policy for processing the configuration information of the SCG LTM candidate primary secondary cell when a CPC occurs and the primary cell changes simultaneously.

It should be understood that content indicated by the first indication information varies based on a scenario, and the network device of the primary cell may determine, based on different scenarios, to send first indication information with different content.

In the first scenario, information included in the first indication information varies based on the device controlling the processing manner. First, the first indication information in a case that the device controlling the processing manner is the network device of the primary cell is described.

In the first scenario, when the device controlling the processing manner is the network device of the primary cell, the first indication information includes at least one of the following:
(1) first retaining indication information corresponding to configuration information of at least one SCG LTM candidate primary secondary cell; (2) first release indication information corresponding to configuration information of at least one SCG LTM candidate primary secondary cell; (3) first retaining common indication information corresponding to configuration information of at least one SCG LTM candidate primary secondary cell represented in a form of a secondary cell set; and (4) first release common indication information corresponding to configuration information of at least one SCG LTM candidate primary secondary cell represented in a form of a secondary cell set.

In other words, the policy for processing the configuration information of the SCG LTM candidate primary secondary cell when a CPC occurs that is indicated by the first indication information is determined based on specific content of the first indication information. For example, if the terminal device determines that the specific content of the first indication information is the first retaining indication information in (1), corresponding configuration information of an SCG LTM candidate primary secondary cell is retained or released based on the first retaining indication information. If it is determined that the specific content of the first indication information is the first release indication information in (2), corresponding configuration information of an SCG LTM candidate primary secondary cell is retained or released based on the first release indication information. If it is determined that the specific content of the first indication information is the first retaining common indication information in (3), corresponding configuration information of an SCG LTM candidate primary secondary cell is retained or released based on the first retaining common indication information. If it is determined that the specific content of the first indication information is the first release common indication information in (4), corresponding configuration information of an SCG LTM candidate primary secondary cell is retained or released based on the first release common indication information.

The first retaining indication information is information for indicating to retain configuration information of at least one SCG LTM candidate primary secondary cell. The first release indication information is information for indicating to release configuration information of at least one SCG LTM candidate primary secondary cell. The first common retaining indication information is information for indicating, by using one secondary cell set as a unit, to retain configuration information of at least one SCG LTM candidate primary secondary cell. The first common release indication information is information for indicating, by using one secondary cell set as a unit, to release configuration information of at least one SCG LTM candidate primary secondary cell.

The first retaining common indication information indicates that all of at least one SCG LTM candidate primary secondary cell in a secondary cell set uses the common retaining indication information. In this case, the at least one SCG LTM candidate primary secondary cell is stored when a CPC occurs. The first release common indication information indicates that all of at least one SCG LTM candidate primary secondary cell in a secondary cell set uses the common release indication information. In this case, the at least one SCG LTM candidate primary secondary cell is released when a CPC occurs.

It should be understood that "first retaining or release indication information corresponding to configuration information of at least one SCG LTM candidate primary secondary cell" may be specifically implemented by associating a candidate primary secondary cell corresponding to configuration information of each SCG LTM candidate primary secondary cell with corresponding first retaining or release indication information. For example, a mapping relationship between an identifier of each candidate primary secondary cell and corresponding first retaining or release indication information is established. Similarly, "first retaining or release common indication information corresponding to configuration information of at least one SCG LTM candidate primary secondary cell represented in a form of a secondary cell set" may be specifically implemented by associating a secondary cell set to which a candidate primary secondary cell corresponding to configuration information of each SCG LTM candidate primary secondary cell belongs with corresponding first retaining or release common indication information. For example, based on a candidate primary secondary cell corresponding to configuration information of each SCG LTM candidate primary secondary cell, a secondary cell set to which the candidate primary secondary cell belongs is determined first, and then a mapping relationship between an identifier of each secondary cell set and corresponding first retaining or release common indication information is established.

The indication information related to "retain" or "release" is information for indicating to retain or release configuration information of at least one SCG LTM candidate primary secondary cell, for example, may be a field of "retain" or "release", or may be a number, a letter, or other information representing "retain" or "release". This is not limited in this application. In addition, the identifier of the candidate primary secondary cell is an identifier for indicating an identity of the candidate primary secondary cell, for example, may be a name of the candidate primary secondary cell, or may be a number, a letter, or other information representing the identity of the candidate primary secondary cell. This is not limited in this application. In addition, the identifier of the secondary cell set is an identifier for indicating an identity of the secondary cell set, for example, may be a name of the secondary cell set, or may be a number, a letter, or other information representing the identity of the secondary cell set. This is not limited in this application.

It should be understood that the process of forming the first retaining or release indication information corresponding to configuration information of at least one SCG LTM candidate primary secondary cell and the process of forming the first retaining or release common indication information corresponding to configuration information of at least one SCG LTM candidate primary secondary cell are merely examples, and should not constitute any limitation on this application.

It should be noted that when the first indication information includes only the foregoing one piece of indication information, specific meanings are as follows.

If the first indication information includes only the first retaining indication information corresponding to configuration information of at least one SCG LTM candidate primary secondary cell, it indicates that configuration information of at least one SCG LTM candidate primary secondary cell with the first retaining indication information is retained, and configuration information of at least one SCG LTM candidate primary secondary cell with no first retaining indication information is released. Similarly, if the first indication information includes only the first release indication information corresponding to configuration information of at least one SCG LTM candidate primary secondary cell, it indicates that configuration information of at least one SCG LTM candidate primary secondary cell with the first release indication information is released, and configuration information of at least one SCG LTM candidate primary secondary cell with no first release indication information is retained. Similarly, if only the first retaining common indication information corresponding to configuration information of at least one SCG LTM candidate primary secondary cell represented in a form of a secondary cell set is included, it indicates that configuration information of at least one SCG LTM candidate primary secondary cell with the first retaining common indication information is retained, and configuration information of at least one SCG LTM candidate primary secondary cell with no first retaining common indication information is released. If only the first release common indication information corresponding to configuration information of at least one SCG LTM candidate primary secondary cell represented in a form of a secondary cell set is included, it indicates that configuration information of at least one SCG LTM candidate primary secondary cell with the first release common indication information is released, and configuration information of at least one SCG LTM candidate primary secondary cell with no first release common indication information is retained.

It should be further understood that, when the first indication information includes a plurality of the foregoing items, a plurality of processing policies of the configuration information of the SCG LTM candidate primary secondary cell may be determined by using one or a combination of the plurality of items.

In this case, when determining the CPC target primary secondary cell to change to, the terminal device obtains corresponding first indication information, and after determining content included in the first indication information, the terminal device determines, based on the content included in the first indication information, a condition that is currently met, and retains or releases the configuration information of the SCG LTM candidate primary secondary cell.

Specifically, when the first condition is met, the configuration information of the SCG LTM candidate primary secondary cell is retained. When the second condition is met, the configuration information of the SCG LTM candidate primary secondary cell is released.

Because there may be one or more SCG LTM candidate primary secondary cells, when there are a plurality of SCG LTM candidate primary secondary cells, policies for processing configuration information of the SCG LTM candidate primary secondary cells may be different, that is, there is a possibility that configuration information of some SCG LTM candidate primary secondary cells is retained, while configuration information of some SCG LTM candidate primary secondary cells is released. Therefore, for clearer description, to-be-determined configuration information of an SCG LTM candidate primary secondary cell is defined as configuration information of a target SCG LTM candidate primary secondary cell.

The following separately describes retaining of the configuration information of the SCG LTM candidate primary secondary cell when the first condition is met, and release of the configuration information of the SCG LTM candidate primary secondary cell when the second condition is met.

When the first condition is met, the first condition includes at least one of the following conditions:
1. the first indication information includes first retaining indication information corresponding to the configuration information of the SCG LTM candidate primary secondary cell;
2. the first indication information includes first release indication information, and the first release indication information does not include first release indication information corresponding to the configuration information of the SCG LTM candidate primary secondary cell;
3. the first indication information includes first retaining common indication information of a secondary cell set to which the SCG LTM candidate primary secondary cell belongs; and
4. the first indication information includes first release common indication information, and the first release common indication information does not include first release common indication information of a secondary cell set to which the SCG LTM candidate primary secondary cell belongs.

It should be noted that if the first condition includes only one of the foregoing conditions, specific meanings are as follows.

If the first indication information includes first retaining indication information corresponding to the configuration information of the target SCG LTM candidate primary secondary cell, the configuration information of the target SCG LTM candidate primary secondary cell is retained. If the first indication information includes the first release indication information, and the first release indication information does not include first release indication information corresponding to the configuration information of the target SCG LTM candidate primary secondary cell, the configuration information of the target SCG LTM candidate primary secondary cell is retained. Similarly, if the first indication information includes first retaining common indication information of a secondary cell set to which the target SCG LTM candidate primary secondary cell belongs, the configuration information of the target SCG LTM candidate primary secondary cell is retained. If the first indication information includes the first release common indication information, and the first release common indication information does not include first release common indication information of a secondary cell set to which the target SCG LTM candidate primary secondary cell belongs, the configuration information of the target SCG LTM candidate primary secondary cell is retained.

It should be further understood that, when the first condition includes a plurality of the foregoing items, when it is determined that the plurality of items are met, the configuration information of the target SCG LTM candidate primary secondary cell is retained.

For the foregoing operation of retaining, specifically, the corresponding configuration information of the SCG LTM candidate primary secondary cell may be continued to be stored. A specific storage location or path is not limited in this application. In addition, this retaining manner is merely an example, and should not constitute any limitation on this application.

When the second condition is met, the second condition includes at least one of the following conditions:
1. the first indication information includes first release indication information corresponding to the configuration information of the SCG LTM candidate primary secondary cell;
2. the first indication information includes first retaining indication information, and the first retaining indication information does not include first retaining indication information corresponding to the configuration information of the SCG LTM candidate primary secondary cell;
3. the first indication information includes first release common indication information of a secondary cell set to which the SCG LTM candidate primary secondary cell belongs; and
4. the first indication information includes first retaining common indication information, and the first retaining common indication information does not include first retaining common indication information of a secondary cell set to which the SCG LTM candidate primary secondary cell belongs.

It should be noted that when the second condition includes only one of the foregoing conditions, specific meanings are as follows.

If the first indication information includes the first release indication information corresponding to the configuration information of the target SCG LTM candidate primary secondary cell, the configuration information of the target SCG LTM candidate primary secondary cell is released. If the first indication information includes the first retaining indication information, and the first retaining indication information does not include first retaining indication information corresponding to the configuration information of the target SCG LTM candidate primary secondary cell, the configuration information of the target SCG LTM candidate primary secondary cell is released. Similarly, if the first indication information includes the first release common indication information of a secondary cell set to which the target SCG LTM candidate primary secondary cell belongs, the configuration information of the target SCG LTM candidate primary secondary cell is released. If the first indication information includes the first retaining common indication information, and the first retaining common indication information does not include first retaining common indication information of a secondary cell set to which the target SCG LTM candidate primary secondary cell belongs, the configuration information of the target SCG LTM candidate primary secondary cell is released.

It should be further understood that, when the second condition includes a plurality of the foregoing items, when it is determined that the plurality of items are met, the configuration information of the target SCG LTM candidate primary secondary cell is released.

For the foregoing operation of release, specifically, the corresponding configuration information of the SCG LTM candidate primary secondary cell may be deleted, or the corresponding configuration information of the SCG LTM candidate primary secondary cell is released in another manner. This is not limited in this application.

In the method for processing configuration information of a candidate cell in this scenario, a corresponding retaining or release indication is configured for configuration information of each SCG LTM candidate primary secondary cell in the first indication information in a manner of separately configuring or configuring in a set, so that the terminal device can clearly determine, based on an information type included in the first indication information, that the device controlling the processing manner is the network device of the primary cell, thereby effectively saving transmission resources.

In the method for processing configuration information of a candidate cell in this scenario, the terminal device may determine, based on specific content indicated by the first indication information in this scenario, whether any one of the foregoing first conditions or any one of the foregoing second conditions is currently met. Therefore, when it is determined that the first condition is met, the configuration information of the SCG LTM candidate primary secondary cell is retained, and when it is determined that the second condition is met, the configuration information of the SCG LTM candidate primary secondary cell is released. Therefore, the terminal device may selectively and timely retain the configuration information of the SCG LTM candidate primary secondary cell, to meet a subsequent LTM mechanism handover requirement, and may selectively and timely release the configuration information of the SCG LTM candidate primary secondary cell, to reduce a terminal load in time.

As described above, in the first scenario, information included in the first indication information varies based on the device controlling the processing manner. The first indication information in a case that the device controlling the processing manner is the terminal device is described.

In the first scenario, when the device controlling the processing manner is the terminal device, the first indication information includes the following information:
(1) indication information that the terminal device autonomously processes the configuration information of the SCG LTM candidate primary secondary cell; and (2) a secondary cell group to which each SCG LTM candidate primary secondary cell belongs.

In other words, the policy for processing the configuration information of the SCG LTM candidate primary secondary cell when a CPC occurs that is indicated by the first indication information is determined based on specific content of the first indication information. For example, if the terminal device determines that specific content of the first indication information is (1) and (2), the terminal device determines to autonomously retain or release the configuration information of the SCG LTM candidate primary secondary cell based on a secondary cell group to which each SCG LTM candidate primary secondary cell belongs.

It should be understood that a specific representation form of "indication information that the terminal device autonomously processes the configuration information of the SCG LTM candidate primary secondary cell" may be a field of "autonomous processing", or may be any piece of identification information representing "autonomous processing". This is not limited in this application. In addition, a representation form of "a secondary cell group to which each SCG LTM candidate primary secondary cell belongs" may be a name, a number, or another form of the secondary cell group to which each SCG LTM candidate primary secondary cell belongs. Therefore, the secondary cell group to which each SCG LTM candidate primary secondary cell belongs may be represented by using a mapping relationship between an SCG LTM candidate primary secondary cell and a secondary cell group to which the SCG LTM candidate primary secondary cell belongs, or may be represented in another form. This is not limited in this application.

In this case, when determining the CPC target primary secondary cell to change to, the terminal device obtains corresponding first indication information, and after determining content included in the first indication information, the terminal device determines, based on the content included in the first indication information, a condition that is currently met, and retains or releases the configuration information of the SCG LTM candidate primary secondary cell.

Specifically, when a fifth condition is met, the configuration information of the SCG LTM candidate primary secondary cell is retained. When a sixth condition is met, the configuration information of the SCG LTM candidate primary secondary cell is released.

The following separately describes retaining of the configuration information of the SCG LTM candidate primary secondary cell when the fifth condition is met, and release of the configuration information of the SCG LTM candidate primary secondary cell when the sixth condition is met.

When the fifth condition is met, the fifth condition is: the secondary cell group to which the candidate primary secondary cell belongs is the same as a secondary cell group to which a source primary secondary cell belongs.

The candidate primary secondary cell is a candidate primary secondary cell of SCG LTM. Similarly, the source primary secondary cell is a source primary secondary cell of SCG LTM.

It should be noted that, when the secondary cell group to which the candidate primary secondary cell belongs is the same as the secondary cell group to which the source primary secondary cell belongs, there is a high probability that subsequent LTM cell handover is still in the secondary cell group. In this case, the configuration information of the SCG LTM candidate primary secondary cell needs to be retained. Therefore, whether the secondary cell group to which the candidate primary secondary cell belongs is the same as the secondary cell group to which the source primary secondary cell belongs is determined based on whether a related identifier of the secondary cell group to which the candidate primary secondary cell belongs is the same as a related identifier of the secondary cell group to which the source primary secondary cell belongs.

It should be understood that the foregoing method for determining whether the secondary cell group to which the candidate primary secondary cell belongs is the same as the secondary cell group to which the source primary secondary cell belongs is merely an example, and should not constitute any limitation on this application.

Therefore, if it is indicated based on the foregoing determining result that the secondary cell group to which the candidate primary secondary cell belongs is the same as the secondary cell group to which the source primary secondary cell belongs, the secondary cell group to which the candidate primary secondary cell belongs is the same as the secondary cell group to which the source primary secondary cell belongs. In consideration of LTM cell handover features, same configuration information of the SCG LTM candidate primary secondary cell for the secondary cell group and the secondary cell group to which the source primary secondary cell belongs is retained.

When the sixth condition is met, the sixth condition is: the secondary cell group to which the candidate primary secondary cell belongs is different from the secondary cell group to which the source primary secondary cell belongs.

It should be noted that, when the secondary cell group to which the candidate primary secondary cell belongs is different from the secondary cell group to which the source primary secondary cell belongs, it is impossible to determine whether there is a high probability that subsequent LTM cell handover is still in the secondary cell group. In this case, the configuration information of the SCG LTM candidate primary secondary cell needs to be released. Therefore, if it is indicated based on the foregoing determining result that the secondary cell group to which the candidate primary secondary cell belongs is different from the secondary cell group to which the source primary secondary cell belongs, for example, do not have a same identifier, the secondary cell group to which the candidate primary secondary cell belongs is different from the secondary cell group to which the source primary secondary cell belongs. In consideration of LTM handover features, same configuration information of the SCG LTM candidate primary secondary cell for the secondary cell group and the secondary cell group to which the source primary secondary cell belongs is released.

It should be understood that, after the terminal device releases the configuration information of the SCG LTM candidate primary secondary cell, the network device of the primary cell needs to reconfigure the configuration information of the SCG LTM candidate primary secondary cell when an LTM mechanism handover is involved subsequently. In this case, the network device of the primary cell should learn related information that the configuration information of the SCG LTM candidate primary secondary cell is released. Therefore, the terminal device forms second indication information based on a result that the configuration information of the SCG LTM candidate primary secondary cell is released, to indicate to the network device of the primary cell that the terminal device has released the configuration information of the SCG LTM candidate primary secondary cell.

The second indication information may be a string of specific fields formed based on the result that the configuration information of the SCG LTM candidate primary secondary cell is released, or may be in another form. This is not limited in this application. In addition, the second indication information may be sent as a piece of independent signaling to the network device of the primary cell by using the terminal device, or may be sent to the network device of the primary cell in another form. This is not limited in this application.

In the method for processing configuration information of a candidate cell in this scenario, the first indication information indicates that the terminal device makes an autonomous decision, and indicates a secondary cell group to which configuration information of each SCG LTM candidate primary secondary cell belongs, so that the terminal device may further autonomously determine, based on specific content indicated by the first indication information in this scenario, to retain or release the configuration information of the SCG LTM candidate primary secondary cell, and determine, based on the secondary cell group to which the configuration information of each SCG LTM candidate primary secondary cell belongs, whether the fifth condition or the sixth condition is currently met. In this way, when it is determined that the fifth condition is met, the configuration information of the SCG LTM candidate primary secondary cell is retained, and when it is determined that the sixth condition is met, the configuration information of the SCG LTM candidate primary secondary cell is released. Therefore, the terminal device may selectively and timely retain the configuration information of the SCG LTM candidate primary secondary cell, to meet a subsequent LTM mechanism handover requirement, and may selectively and timely release the configuration information of the SCG LTM candidate primary secondary cell, to reduce a terminal load in time.

In the method for processing configuration information of a candidate cell in this scenario, the terminal device sends, to the network device of the primary cell, the second indication information indicating that the terminal device has released the configuration information of the SCG LTM candidate primary secondary cell, so that a release state of the configuration information of the SCG LTM candidate primary secondary cell is transferred to the network device of the primary cell. This facilitates configuring the configuration information of the SCG LTM candidate primary secondary cell in time when the terminal device triggers the LTM mechanism subsequently.

In a second scenario, information included in the first indication information varies based on the device controlling the processing manner. The first indication information in a case that the device controlling the processing manner is the network device of the primary cell is described.

In the second scenario, when the device controlling the processing manner is the network device of the primary cell, in consideration of a feature that a primary secondary cell assists a primary cell in providing a network service, if indication information for the configuration information of the SCG LTM candidate primary secondary cell exists when the primary cell changes simultaneously, the indication information is preferentially considered in determining to retain or release the configuration information of the SCG LTM candidate primary secondary cell, and the first indication information includes the following information:
second retaining indication information corresponding to configuration information of at least one SCG LTM candidate primary secondary cell when the primary cell changes simultaneously; or second release indication information corresponding to configuration information of at least one SCG LTM candidate primary secondary cell when the primary cell changes simultaneously; and
at least one of the following: (1) first retaining indication information corresponding to configuration information of at least one SCG LTM candidate primary secondary cell; (2) first release indication information corresponding to configuration information of at least one SCG LTM candidate primary secondary cell; (3) first retaining common indication information corresponding to configuration information of at least one SCG LTM candidate primary secondary cell represented in a form of a secondary cell set; and (4) first release common indication information corresponding to configuration information of at least one SCG LTM candidate primary secondary cell represented in a form of a secondary cell set.

The second retaining indication information is information for indicating to retain the configuration information of the SCG LTM candidate primary secondary cell when the primary cell changes simultaneously. The second release indication information is information for indicating to release the configuration information of the SCG LTM candidate primary secondary cell when the primary cell changes simultaneously.

It should be understood that "second retaining or release indication information corresponding to configuration information of at least one SCG LTM candidate primary secondary cell" may be specifically implemented by associating each candidate primary cell with corresponding second retaining or release indication information when the primary cell changes simultaneously. For example, a mapping relationship between an identifier of each candidate primary cell and corresponding second retaining/release indication information is established.

A specific representation form of the second retaining or release indication information may be any identifier representing "retain" or "release", for example, a number, a field, or another form. This is not limited in this application. In addition, the identifier of the candidate primary cell is an identifier for indicating an identity of the candidate primary cell, for example, may be a name of the candidate primary cell, or may be a number, a letter, or other information representing the identity of the candidate primary cell. This is not limited in this application.

It should be understood that the foregoing association process is merely an example, and should not constitute any limitation on this application.

In consideration of the feature that a primary secondary cell assists a primary cell in providing a network service, when the primary cell changes simultaneously, whether the first indication information includes the second release indication information or the second retaining indication information is preferentially considered in determining to retain or release the corresponding configuration information of the SCG LTM candidate primary secondary cell. For example, when the first indication information includes the second release indication information, regardless of whether first related indication information corresponding to the configuration information of the SCG LTM candidate primary secondary cell is retaining or release, it is determined to release the configuration information of the SCG LTM candidate primary secondary cell. When the first indication information includes the second retaining indication information, it needs to be further determined whether the first related indication information corresponding to the configuration information of the SCG LTM candidate primary secondary cell is retaining or release, when the first related indication information indicates retaining, the configuration information of the SCG LTM candidate primary secondary cell is retained, and when the first related indication information indicates release, the configuration information of the SCG LTM candidate primary secondary cell is released.

The first related indication information is a general expression of the first retaining indication information, the first release indication information, the first retaining common indication information, and the first release common indication information. When the first related indication information is mentioned, it may be understood as the first retaining indication information, the first release indication information, the first retaining common indication information, or the first release common indication information. The first related indication information should not be understood separately from the first retaining indication information, the first release indication information, the first retaining common indication information, or the first release common indication information.

It should be further understood that the second retaining indication information and the second release indication information are content included in the first indication information when the primary cell changes simultaneously. Therefore, if the first indication information includes the second retaining indication information or the second release indication information, it indicates that currently, the primary cell changes simultaneously.

It should be noted that, when the first indication information further includes one piece of the foregoing first related indication information in addition to including "second retaining indication information or second release indication information corresponding to configuration information of at least one SCG LTM candidate primary secondary cell when the primary cell changes simultaneously", specific meanings are as follows.

First, it is described that the first indication information further includes at least one piece of the foregoing first related indication information in addition to including "second retaining indication information corresponding to configuration information of at least one SCG LTM candidate primary secondary cell when the primary cell changes simultaneously".

Specifically, if the first indication information further includes the first retaining indication information corresponding to configuration information of at least one SCG LTM candidate primary secondary cell in addition to including the second retaining indication information corresponding to configuration information of at least one SCG LTM candidate primary secondary cell when the primary cell changes simultaneously, the configuration information of the at least one SCG LTM candidate primary secondary cell is retained. Similarly, if the first indication information further includes the first release indication information corresponding to configuration information of at least one SCG LTM candidate primary secondary cell in addition to including the second retaining indication information corresponding to configuration information of at least one SCG LTM candidate primary secondary cell when the primary cell changes simultaneously, the configuration information of the at least one SCG LTM candidate primary secondary cell is released. Similarly, if the first indication information further includes the first retaining common indication information corresponding to configuration information of at least one SCG LTM candidate primary secondary cell in addition to including the second retaining indication information corresponding to configuration information of at least one SCG LTM candidate primary secondary cell when the primary cell changes simultaneously, the at least one SCG LTM candidate primary secondary cell is retained. Similarly, if the first indication information further includes the first release common indication information corresponding to configuration information of at least one SCG LTM candidate primary secondary cell in addition to including the second retaining indication information corresponding to configuration information of at least one SCG LTM candidate primary secondary cell when the primary cell changes simultaneously, the configuration information of the at least one SCG LTM candidate primary secondary cell is released.

Second, it is described that the first indication information further includes one piece of the foregoing first related indication information in addition to including "second release indication information corresponding to configuration information of at least one SCG LTM candidate primary secondary cell when the primary cell changes simultaneously".

Specifically, if the first indication information further includes the first related indication information corresponding to configuration information of at least one SCG LTM candidate primary secondary cell in addition to including the second release indication information corresponding to configuration information of at least one SCG LTM candidate primary secondary cell when the primary cell changes simultaneously, the configuration information of the at least one SCG LTM candidate primary secondary cell is released.

It should be further understood that, when the first indication information further includes a plurality of pieces of the foregoing first related indication information in addition to including "second retaining or release indication information corresponding to configuration information of at least one SCG LTM candidate primary secondary cell when the primary cell changes simultaneously", the policy for processing the configuration information of the SCG LTM candidate primary secondary cell may be determined with reference to one or more of the items on the basis of the second retaining or release indication information.

In this case, when determining the CPC target primary secondary cell and target primary cell to change to, the terminal device obtains corresponding first indication information, and after determining content included in the first indication information, the terminal device determines, based on the content included in the first indication information, a condition that is currently met, and retains or releases the configuration information of the SCG LTM candidate primary secondary cell.

Specifically, when a third condition is met, the configuration information of the SCG LTM candidate primary secondary cell is retained. When a fourth condition is met, the configuration information of the SCG LTM candidate primary secondary cell is released.

As described above, for clearer description, to-be-determined configuration information of an SCG LTM candidate primary secondary cell is defined as configuration information of a target SCG LTM candidate primary secondary cell.

The following separately describes retaining of the configuration information of the SCG LTM candidate primary secondary cell when the third condition is met, and release of the configuration information of the SCG LTM candidate primary secondary cell when the fourth condition is met.

When the third condition is met, the third condition includes at least one of the following conditions:
1. the first indication information includes second retaining indication information corresponding to the configuration information of the SCG LTM candidate primary secondary cell when the primary cell changes simultaneously, and the first indication information includes first retaining indication information corresponding to the configuration information of the SCG LTM candidate primary secondary cell;
2. the first indication information includes second retaining indication information corresponding to the configuration information of the SCG LTM candidate primary secondary cell when the primary cell changes simultaneously, and the first indication information includes first retaining common indication information of a secondary cell set to which the SCG LTM candidate primary secondary cell belongs;
3. the first indication information includes second retaining indication information corresponding to the configuration information of the SCG LTM candidate primary secondary cell when the primary cell changes simultaneously, the first indication information includes first release indication information, and the first release indication information does not include first release indication information corresponding to the configuration information of the SCG LTM candidate primary secondary cell;
4. the first indication information includes second retaining indication information corresponding to the configuration information of the SCG LTM candidate primary secondary cell when the primary cell changes simultaneously, the first indication information includes first release common indication information, and the first release common indication information does not include first release common indication information of a secondary cell set to which the SCG LTM candidate primary secondary cell belongs;
5. the first indication information includes second release indication information, the second release indication information does not include second release indication information corresponding to the configuration information of the SCG LTM candidate primary secondary cell when the primary cell changes simultaneously, and the first indication information includes first retaining indication information corresponding to the configuration information of the SCG LTM candidate primary secondary cell;
6. the first indication information includes second release indication information, the second release indication information does not include second release indication information corresponding to the configuration information of the SCG LTM candidate primary secondary cell when the primary cell changes simultaneously, and the first indication information includes first retaining common indication information of a secondary cell set to which the SCG LTM candidate primary secondary cell belongs;
7. the first indication information includes second release indication information, the second release indication information does not include second release indication information corresponding to the configuration information of the SCG LTM candidate primary secondary cell when the primary cell changes simultaneously, the first indication information includes first release indication information, and the first release indication information does not include first release indication information corresponding to the configuration information of the SCG LTM candidate primary secondary cell; and
8. the first indication information includes second release indication information, the second release indication information does not include second release indication information corresponding to the configuration information of the SCG LTM candidate primary secondary cell when the primary cell changes simultaneously, the first indication information includes first release common indication information, and the first release common indication information does not include first release common indication information of a secondary cell set to which the SCG LTM candidate primary secondary cell belongs.

It should be noted that when the third condition includes only one of the foregoing conditions, specific meanings are as follows.

If the first indication information includes the second retaining indication information corresponding to the configuration information of the target SCG LTM candidate primary secondary cell, and the first indication information includes the first retaining indication information corresponding to the configuration information of the target SCG LTM candidate primary secondary cell, the configuration information of the target SCG LTM candidate primary secondary cell is retained. Similarly, if the first indication information includes the second retaining indication information corresponding to the configuration information of the target SCG LTM candidate primary secondary cell, and the first indication information includes the first retaining common indication information of the secondary cell set to which the target SCG LTM candidate primary secondary cell belongs, the configuration information of the target SCG LTM candidate primary secondary cell is retained. Similarly, if the first indication information includes the second retaining indication information corresponding to the configuration information of the target SCG LTM candidate primary secondary cell, the first indication information includes the first release indication information, and the first release indication information does not include the first release indication information corresponding to the configuration information of the target SCG LTM candidate primary secondary cell, the configuration information of the target SCG LTM candidate primary secondary cell is retained. Similarly, if the first indication information includes the second retaining indication information corresponding to the configuration information of the target SCG LTM candidate primary secondary cell, the first indication information includes the first release common indication information, and the first release common indication information does not include the first release common indication information of the secondary cell set to which the target SCG LTM candidate primary secondary cell belongs, the configuration information of the target SCG LTM candidate primary secondary cell is retained. Similarly, if the first indication information includes the second release indication information, the second release indication information does not include the second release indication information corresponding to the configuration information of the target SCG LTM candidate primary secondary cell, and the first indication information includes the first retaining indication information corresponding to the configuration information of the target SCG LTM candidate primary secondary cell, the configuration information of the target SCG LTM candidate primary secondary cell is retained. Similarly, if the first indication information includes the second release indication information, the second release indication information does not include the second release indication information corresponding to the configuration information of the target SCG LTM candidate primary secondary cell, and the first indication information includes the first retaining common indication information of the secondary cell set to which the target SCG LTM candidate primary secondary cell belongs, the configuration information of the target SCG LTM candidate primary secondary cell is retained. Similarly, if the first indication information includes the second release indication information, the second release indication information does not include the second release indication information corresponding to the configuration information of the target SCG LTM candidate primary secondary cell, the first indication information includes the first release indication information, and the first release indication information does not include the first release indication information corresponding to the configuration information of the target SCG LTM candidate primary secondary cell, the configuration information of the target SCG LTM candidate primary secondary cell is retained. Similarly, if the first indication information includes the second release indication information, the second release indication information does not include the second release indication information corresponding to the configuration information of the target SCG LTM candidate primary secondary cell, the first indication information includes the first release common indication information, and the first release common indication information does not include the first release common indication information of the secondary cell set to which the target SCG LTM candidate primary secondary cell belongs, the configuration information of the target SCG LTM candidate primary secondary cell is retained.

It should be further understood that, when the third condition includes a plurality of the foregoing items, when it is determined that the plurality of items are met, the configuration information of the target SCG LTM candidate primary secondary cell is retained.

When the fourth condition is met, the fourth condition includes at least one of the following conditions:
1. the first indication information includes second release indication information corresponding to the configuration information of the SCG LTM candidate primary secondary cell when the primary cell changes simultaneously;
2. the first indication information includes second retaining indication information, and the second retaining indication information does not include second retaining indication information corresponding to the configuration information of the SCG LTM candidate primary secondary cell when the primary cell changes simultaneously;
3. the first indication information includes second retaining indication information corresponding to the configuration information of the SCG LTM candidate primary secondary cell when the primary cell changes simultaneously, and the first indication information includes first release indication information corresponding to the configuration information of the SCG LTM candidate primary secondary cell;
4. the first indication information includes second retaining indication information corresponding to the configuration information of the SCG LTM candidate primary secondary cell when the primary cell changes simultaneously, and the first indication information includes first release common indication information of a secondary cell set to which the SCG LTM candidate primary secondary cell belongs;
5. the first indication information includes second release indication information, the second release indication information does not include second release indication information corresponding to the configuration information of the SCG LTM candidate primary secondary cell when the primary cell changes simultaneously, and the first indication information includes first release indication information corresponding to the configuration information of the SCG LTM candidate primary secondary cell; and
6. the first indication information includes second release indication information, the second release indication information does not include second release indication information corresponding to the configuration information of the SCG LTM candidate primary secondary cell when the primary cell changes simultaneously, and the first indication information includes first release common indication information of a secondary cell set to which the SCG LTM candidate primary secondary cell belongs.

It should be noted that when the fourth condition includes only one of the foregoing conditions, specific meanings are as follows.

If the first indication information includes the second release indication information corresponding to the configuration information of the target SCG LTM candidate primary secondary cell, the configuration information of the target SCG LTM candidate primary secondary cell is released regardless of whether the configuration information of the target SCG LTM candidate primary secondary cell has the first related indication information, or whether the first related indication information corresponding to the configuration information of the target SCG LTM candidate primary secondary cell indicates retaining or release. Similarly, if the first indication information includes the second retaining indication information, and the second retaining indication information does not include the second retaining indication information corresponding to the configuration information of the target SCG LTM candidate primary secondary cell, the configuration information of the target SCG LTM candidate primary secondary cell is released regardless of whether the configuration information of the target SCG LTM candidate primary secondary cell has the first related indication information, or whether the first related indication information corresponding to the configuration information of the target SCG LTM candidate primary secondary cell indicates retaining or release. Similarly, if the first indication information includes the second retaining indication information corresponding to the configuration information of the target SCG LTM candidate primary secondary cell, and the first indication information includes the first release indication information corresponding to the configuration information of the target SCG LTM candidate primary secondary cell, the configuration information of the target SCG LTM candidate primary secondary cell is released. Similarly, if the first indication information includes the second retaining indication information corresponding to the configuration information of the target SCG LTM candidate primary secondary cell, and the first indication information includes the first release common indication information of the secondary cell set to which the target SCG LTM candidate primary secondary cell belongs, the configuration information of the target SCG LTM candidate primary secondary cell is released. Similarly, if the first indication information includes the second release indication information, the second release indication information does not include the second release indication information corresponding to the configuration information of the target SCG LTM candidate primary secondary cell, and the first indication information includes the first release indication information corresponding to the configuration information of the target SCG LTM candidate primary secondary cell, the configuration information of the target SCG LTM candidate primary secondary cell is released. Similarly, if the first indication information includes the second release indication information, the second release indication information does not include the second release indication information corresponding to the configuration information of the target SCG LTM candidate primary secondary cell, and the first indication information includes the first release common indication information of the secondary cell set to which the target SCG LTM candidate primary secondary cell belongs, the configuration information of the target SCG LTM candidate primary secondary cell is released.

It should be further understood that, when the fourth condition includes a plurality of the foregoing items, when it is determined that the plurality of items are met, the configuration information of the target SCG LTM candidate primary secondary cell is released.

In the method for processing configuration information of a candidate cell in this scenario, the second retaining or release indication information in a case that the primary cell changes simultaneously is configured in the first indication information for configuration information of each SCG LTM candidate primary secondary cell, and corresponding first related indication information is configured for the configuration information of each SCG LTM candidate primary secondary cell in a manner of separately configuring or configuring in a set, so that when the primary cell changes simultaneously, the terminal may determine, based on the second retaining or release indication information and specific content indicated in the first related indication information, whether any one of the third conditions or any one of the fourth conditions is currently met. Therefore, when it is determined that the third condition is met, the configuration information of the SCG LTM candidate primary secondary cell is retained, and when it is determined that the fourth condition is met, the configuration information of the SCG LTM candidate primary secondary cell is released. Therefore, when the primary cell changes simultaneously, the terminal device may selectively and timely retain the configuration information of the SCG LTM candidate primary secondary cell, to meet a subsequent LTM mechanism handover requirement, and may selectively and timely release the configuration information of the SCG LTM candidate primary secondary cell, to reduce a terminal load.

As described above, in the second scenario, information included in the first indication information varies based on the device controlling the processing manner. The first indication information in a case that the device controlling the processing manner is the terminal device is described.

In the second scenario, when the device controlling the processing manner is the terminal device, in consideration of a feature that a primary secondary cell assists a primary cell in providing a network service, if indication information for the configuration information of the SCG LTM candidate primary secondary cell exists when the primary cell changes simultaneously, the indication information is preferentially considered in determining to retain or release the configuration information of the SCG LTM candidate primary secondary cell, and the first indication information includes the following information:
second retaining indication information or second release indication information corresponding to configuration information of at least one SCG LTM candidate primary secondary cell when the primary cell changes simultaneously;
(1) indication information that the terminal device autonomously processes the configuration information of the SCG LTM candidate primary secondary cell; and (2) a secondary cell group to which each SCG LTM candidate primary secondary cell belongs.

In consideration of the feature that a primary secondary cell assists a primary cell in providing a network service, when the primary cell changes simultaneously, whether the first indication information includes the second release indication information or the second retaining indication information is preferentially considered in determining to retain or release the corresponding configuration information of the SCG LTM candidate primary secondary cell. For example, when the first indication information includes the second release indication information, after determining to use an autonomous decision to process the configuration information of the SCG LTM candidate primary secondary cell, the terminal device may ignore a secondary cell group to which each SCG LTM candidate primary secondary cell belongs, and determine to release the configuration information of the SCG LTM candidate primary secondary cell. When the first indication information includes the second retaining indication information, after determining to use an autonomous decision to process the configuration information of the SCG LTM candidate primary secondary cell, the terminal device may further determine a secondary cell group to which each SCG LTM candidate primary secondary cell belongs, and determine, based on the secondary cell group to which each SCG LTM candidate primary secondary cell belongs, whether to retain or release the configuration information of the SCG LTM candidate primary secondary cell.

When the first indication information includes the second retaining indication information, the determining, based on the secondary cell group to which each SCG LTM candidate primary secondary cell belongs, whether to retain or release the configuration information of the SCG LTM candidate primary secondary cell may specifically include:
determining whether a secondary cell group to which an SCG LTM candidate primary secondary cell corresponding to the configuration information of the SCG LTM candidate primary secondary cell belongs meets a condition for retaining or release, and performing retaining when the condition for retaining is met, and performing release when the condition for release is met.

In this case, when determining the CPC target primary secondary cell and target primary cell to change to, the terminal device obtains corresponding first indication information, and after determining content included in the first indication information, the terminal device determines, based on the content included in the first indication information, a condition that is currently met, and retains or releases the configuration information of the SCG LTM candidate primary secondary cell.

Specifically, when a seventh condition is met, the configuration information of the SCG LTM candidate primary secondary cell is retained. When an eighth condition is met, the configuration information of the SCG LTM candidate primary secondary cell is released.

In this scenario, when the primary cell changes simultaneously, the terminal device autonomously determines to retain or release the configuration information of the SCG LTM candidate primary secondary cell. Therefore, in consideration of the fact that there may be one or more candidate primary cells, and when there are a plurality of candidate primary cells, policies for processing the configuration information of the SCG LTM candidate primary secondary cell when the primary cell changes simultaneously may be different, that is, there is a possibility that a part of policies for processing the configuration information of the SCG LTM candidate primary secondary cell when the primary cell changes simultaneously are retaining, and a part of policies for processing the configuration information of the SCG LTM candidate primary secondary cell when the primary cell changes simultaneously are release. For clearer description, to-be-determined configuration information of an SCG LTM candidate primary secondary cell is defined as configuration information of a target SCG LTM candidate primary secondary cell.

The following separately describes retaining of the configuration information of the SCG LTM candidate primary secondary cell when the seventh condition is met, and release of the configuration information of the SCG LTM candidate primary secondary cell when the eighth condition is met.

When the seventh condition is met, the seventh condition is at least one of the following conditions:
1. the first indication information includes second retaining indication information corresponding to the configuration information of the SCG LTM candidate primary secondary cell when the primary cell changes simultaneously, and the secondary cell group to which the candidate primary secondary cell belongs is the same as a secondary cell group to which a source primary secondary cell belongs; and
2. the first indication information includes second release indication information, the second release indication information does not include second release indication information corresponding to the configuration information of the SCG LTM candidate primary secondary cell, and the secondary cell group to which the candidate primary secondary cell belongs is the same as the secondary cell group to which the source primary secondary cell belongs.

It should be noted that when the seventh condition includes only one of the foregoing conditions, specific meanings are as follows.

If the first indication information includes the second retaining indication information corresponding to the configuration information of the target SCG LTM candidate primary secondary cell, and the secondary cell group to which the candidate primary secondary cell corresponding to the second retaining indication information belongs is the same as the secondary cell group to which the source primary secondary cell belongs, the configuration information of the target SCG LTM candidate primary secondary cell is retained. If the first indication information includes the second release indication information, the second release indication information does not include the second release indication information corresponding to the configuration information of the target SCG LTM candidate primary secondary cell, and the secondary cell group to which the candidate primary secondary cell corresponding to the second release indication information belongs is the same as the secondary cell group to which the source primary secondary cell belongs, the configuration information of the target SCG LTM candidate primary secondary cell is retained.

It should be further understood that, when the seventh condition includes a plurality of the foregoing items, when it is determined that the plurality of items are met, the configuration information of the target SCG LTM candidate primary secondary cell is retained.

When the eighth condition is met, the eighth condition is at least one of the following conditions:
1. the first indication information includes second release indication information corresponding to the configuration information of the SCG LTM candidate primary secondary cell when the primary cell changes simultaneously;
2. the first indication information includes second retaining indication information, and the second retaining indication information does not include second retaining indication information corresponding to the configuration information of the SCG LTM candidate primary secondary cell when the primary cell changes simultaneously;
3. the first indication information includes second retaining indication information corresponding to the configuration information of the SCG LTM candidate primary secondary cell when the primary cell changes simultaneously, and the secondary cell group to which the candidate primary secondary cell belongs is different from a secondary cell group to which a source primary secondary cell belongs; and
4. the first indication information includes second release indication information, the second release indication information does not include second release indication information corresponding to the configuration information of the SCG LTM candidate primary secondary cell when the primary cell changes simultaneously, and the secondary cell group to which the candidate primary secondary cell belongs is different from the secondary cell group to which the source primary secondary cell belongs.

It should be noted that when the eighth condition includes only one of the foregoing conditions, specific meanings are as follows.

If the first indication information includes the second release indication information corresponding to the configuration information of the target SCG LTM candidate primary secondary cell, the configuration information of the target SCG LTM candidate primary secondary cell is released regardless of whether the secondary cell group to which the candidate primary secondary cell corresponding to the configuration information of the target SCG LTM candidate primary secondary cell belongs is the same as the secondary cell group to which the source primary secondary cell belongs. If the first indication information includes the second retaining indication information, and the second retaining indication information does not include the second retaining indication information corresponding to the configuration information of the target SCG LTM candidate primary secondary cell, the configuration information of the target SCG LTM candidate primary secondary cell is released regardless of whether the secondary cell group to which the candidate primary secondary cell corresponding to the configuration information of the target SCG LTM candidate primary secondary cell belongs is the same as the secondary cell group to which the source primary secondary cell belongs. If the first indication information includes the second retaining indication information corresponding to the configuration information of the target SCG LTM candidate primary secondary cell, and the secondary cell group to which the candidate primary secondary cell corresponding to the second retaining indication information belongs is different from the secondary cell group to which the source primary secondary cell belongs, the configuration information of the target SCG LTM candidate primary secondary cell is released. If the first indication information includes the second release indication information, the second release indication information does not include the second release indication information corresponding to the configuration information of the target SCG LTM candidate primary secondary cell, and the secondary cell group to which the candidate primary secondary cell corresponding to the second release indication information belongs is different from the secondary cell group to which the source primary secondary cell belongs, the configuration information of the target SCG LTM candidate primary secondary cell is released.

It should be further understood that, when the eighth condition includes a plurality of the foregoing items, when it is determined that the plurality of items are met, the configuration information of the target SCG LTM candidate primary secondary cell is released.

It should be understood that, after the terminal device releases the configuration information of the SCG LTM candidate primary secondary cell, the network device of the target primary cell needs to reconfigure the configuration information of the SCG LTM candidate primary secondary cell when an LTM mechanism handover is involved subsequently. In this case, the network device of the target primary cell should learn related information that the configuration information of the SCG LTM candidate primary secondary cell is released. Therefore, the terminal device forms third indication information based on a result that the configuration information of the SCG LTM candidate primary secondary cell is released, to indicate to the network device of the target primary cell that the terminal device has released the configuration information of the SCG LTM candidate primary secondary cell.

The third indication information may be a string of specific fields formed based on the result that the configuration information of the SCG LTM candidate primary secondary cell is released, or may be in another form. This is not limited in this application. In addition, the third indication information may be sent as a piece of independent signaling to the network device of the primary cell by using the terminal device, or may be sent to the network device of the primary cell in another form. This is not limited in this application.

In the method for processing configuration information of a candidate cell in this scenario, the second retaining or release indication information in a case that the primary cell changes simultaneously is configured in the first indication information for configuration information of each SCG LTM candidate primary secondary cell, and the first indication information indicates that the terminal device makes an autonomous decision and indicates a secondary cell group to which configuration information of each SCG LTM candidate primary secondary cell belongs, so that the terminal device may autonomously determine, when the primary cell changes simultaneously with reference to specific content indicated by the first indication information, to retain or release the configuration information of the SCG LTM candidate primary secondary cell, and determine, based on the second retaining or release indication information and the secondary cell group to which the configuration information of each SCG LTM candidate primary secondary cell belongs, whether any one of the seventh conditions or any one of the eighth conditions is currently met. In this way, when it is determined that the seventh condition is met, the configuration information of the SCG LTM candidate primary secondary cell is retained, and when it is determined that the eighth condition is met, the configuration information of the SCG LTM candidate primary secondary cell is released. Therefore, when the primary cell changes simultaneously, the terminal device may selectively and timely retain the configuration information of the SCG LTM candidate primary secondary cell, to meet a subsequent LTM mechanism handover requirement, and may selectively and timely release the configuration information of the SCG LTM candidate primary secondary cell, to reduce a terminal load.

In the method for processing configuration information of a candidate cell in this scenario, the terminal device sends, to the network device of the target primary cell, the third indication information indicating that the terminal device has released the configuration information of the SCG LTM candidate primary secondary cell, so that a release state of the configuration information of the SCG LTM candidate primary secondary cell is transferred to the network device of the target primary cell. This facilitates configuring the configuration information of the SCG LTM candidate primary secondary cell in time when the terminal device triggers the LTM mechanism subsequently.

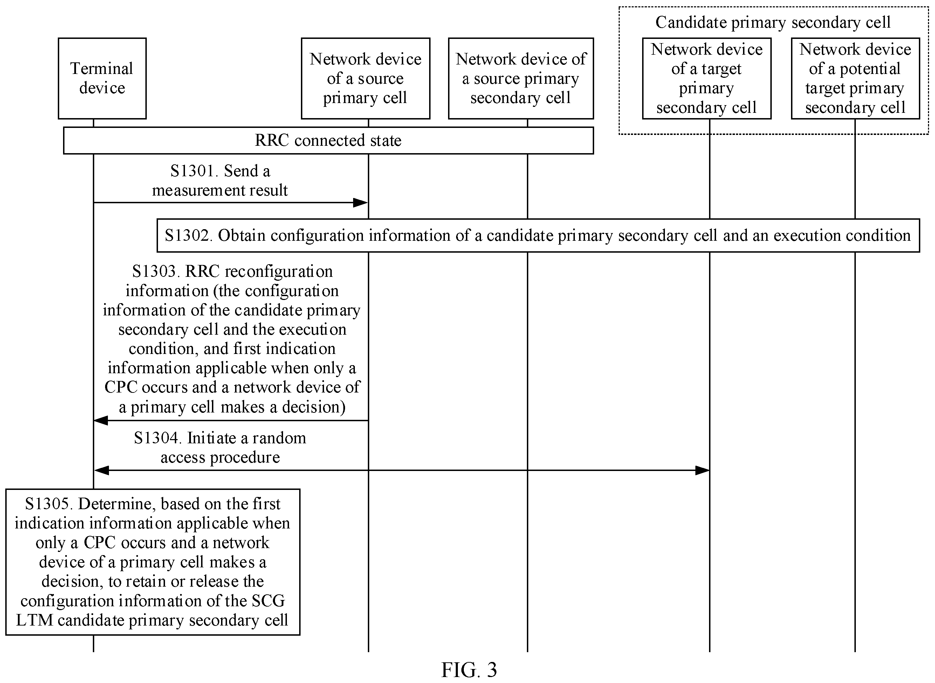

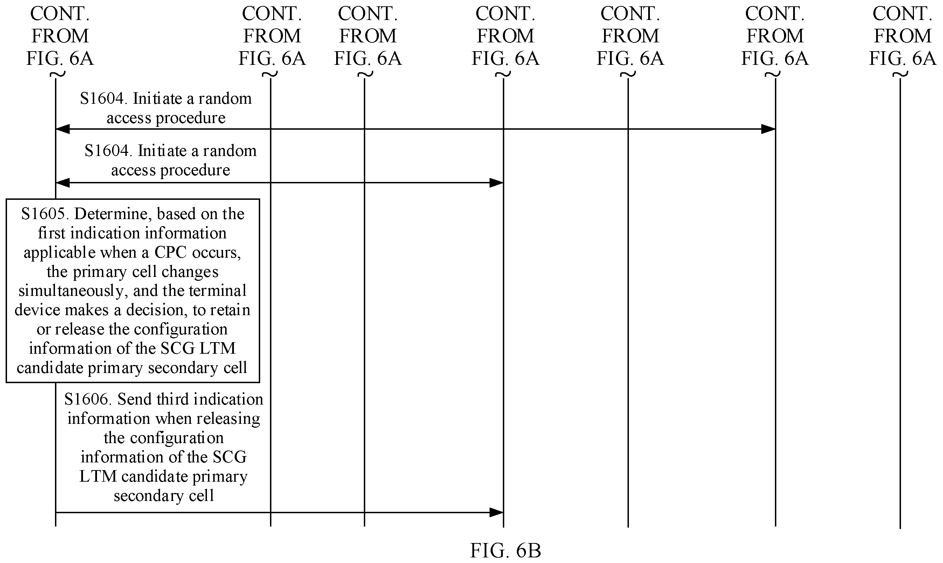

Referring to FIG. 3 to FIG. 6A and FIG. 6B, the following separately describes, in detail in a manner of signaling interaction between devices, solutions for processing configuration information of a candidate cell in a first scenario in which the device controlling the processing manner is the network device of the primary cell, or the device controlling the processing manner is the terminal device and in a second scenario in which the device controlling the processing manner is the network device of the primary cell, or the device controlling the processing manner is the terminal device.

FIG. 3 is a diagram of signaling interaction between a terminal device and each network device when only a CPC occurs and a network device of a primary cell makes a decision in an embodiment of this application from a perspective of device interaction. With reference to FIG. 3, the following describes this embodiment of this application. It may specifically include S1301 to S1305 in the following.

S1301. A terminal device sends a measurement result to a network device of a source primary cell.

The terminal device, the network device of the source primary cell, and a network device of a source primary secondary cell are in an RRC connected state.

S1302. The network device of the source primary cell obtains configuration information of a candidate primary secondary cell and an execution condition from a network device of the candidate primary secondary cell.

The candidate primary secondary cell includes a target primary secondary cell and a potential target primary secondary cell. There are one or more candidate primary secondary cells.

S1303. The network device of the source primary cell sends RRC reconfiguration information to the terminal device, where the RRC reconfiguration information is used for carrying the configuration information of the candidate primary secondary cell and the execution condition, and first indication information applicable when only a CPC occurs and a network device of a primary cell makes a decision.

The first indication information applicable when only a CPC occurs and a network device of a primary cell makes a decision includes at least one of the following: (1) first retaining indication information corresponding to configuration information of at least one SCG LTM candidate primary secondary cell; (2) first release indication information corresponding to configuration information of at least one SCG LTM candidate primary secondary cell; (3) first retaining common indication information corresponding to configuration information of at least one SCG LTM candidate primary secondary cell represented in a form of a secondary cell set; and (4) first release common indication information corresponding to configuration information of at least one SCG LTM candidate primary secondary cell represented in a form of a secondary cell set.

It should be understood that the first indication information applicable when only a CPC occurs and a network device of a primary cell makes a decision may alternatively be sent as an independent piece of signaling. To make the accompanying drawings brief and clear, only a case in which the first indication information is carried in the RRC reconfiguration information is described. However, the description is merely an example, and should not constitute any limitation on this application.

S1304. The terminal device initiates a random access procedure to the target primary secondary cell when determining a target primary secondary cell to change to.

It should be understood that, when the terminal device determines the target primary secondary cell to change to, the network device of the source primary secondary cell may further send an LTM handover command to the terminal device.

S1305. The terminal device determines, based on the first indication information applicable when only a CPC occurs and a network device of a primary cell makes a decision, to retain or release the configuration information of the SCG LTM candidate primary secondary cell.

It should be noted that, a specific execution solution of retaining or releasing the configuration information of the SCG LTM candidate primary secondary cell in this embodiment is similar to a specific execution solution in the first scenario in which the device controlling the processing manner is the network device of the primary cell in the foregoing embodiment. Details are not described herein again.

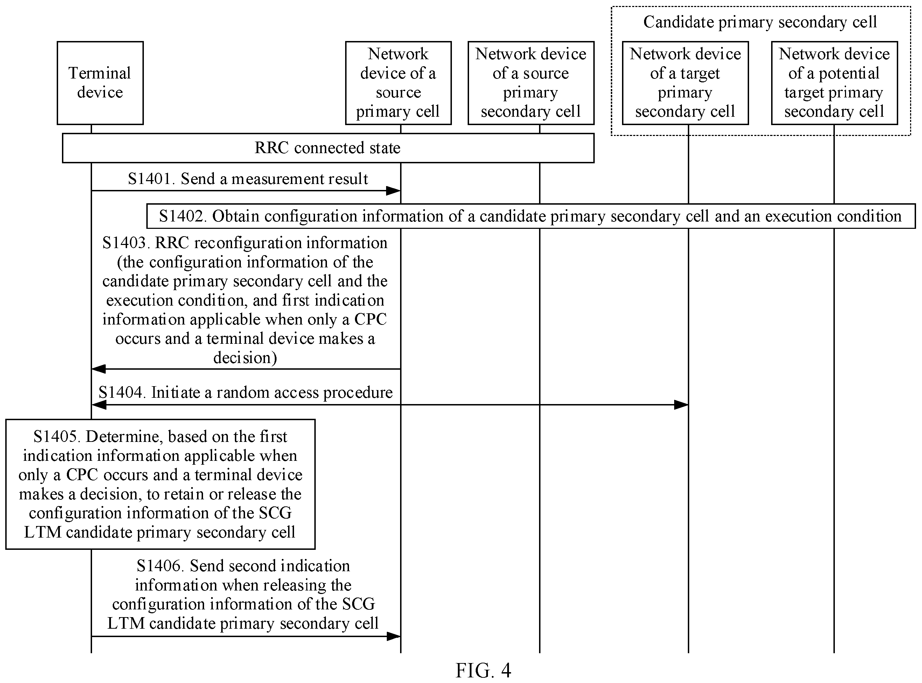

FIG. 4 is a diagram of signaling interaction between a terminal device and each network device when only a CPC occurs and a terminal device makes a decision in an embodiment of this application from a perspective of device interaction. With reference to FIG. 4, the following describes this embodiment of this application. It may specifically include S1401 to S1406 in the following.

S1401. A terminal device sends a measurement result to a network device of a source primary cell.

The terminal device, the network device of the source primary cell, and a network device of a source primary secondary cell are in an RRC connected state.

S1402. The network device of the source primary cell obtains configuration information of a candidate primary secondary cell and an execution condition from a network device of the candidate primary secondary cell.

The candidate primary secondary cell includes a target primary secondary cell and a potential target primary secondary cell. There are one or more candidate primary secondary cells.

S1403. The network device of the source primary cell sends RRC reconfiguration information to the terminal device, where the RRC reconfiguration information is used for carrying the configuration information of the candidate primary secondary cell and the execution condition, and first indication information applicable when only a CPC occurs and a terminal device makes a decision.

The first indication information applicable when only a CPC occurs and a terminal device makes a decision includes the following information: (1) indication information that the terminal device autonomously processes the configuration information of the SCG LTM candidate primary secondary cell; and (2) a secondary cell group to which each SCG LTM candidate primary secondary cell belongs.

It should be understood that the first indication information applicable when only a CPC occurs and a terminal device makes a decision may alternatively be sent as an independent piece of signaling. To make the accompanying drawings brief and clear, only a case in which the first indication information is carried in the RRC reconfiguration information is described. However, the description is merely an example, and should not constitute any limitation on this application.

S1404. The terminal device initiates a random access procedure to the target primary secondary cell when determining a target primary secondary cell to change to.

It should be understood that, when the terminal device determines the target primary secondary cell to change to, the network device of the source primary secondary cell may further send an LTM handover command to the terminal device.

S1405. The terminal device determines, based on the first indication information applicable when only a CPC occurs and a terminal device makes a decision, to retain or release the configuration information of the SCG LTM candidate primary secondary cell.

S1406. When releasing the configuration information of the SCG LTM candidate primary secondary cell, the terminal device sends second indication information to the network device of the source primary cell, where the second indication information is used for notifying the network device of the source primary cell that the configuration information of the SCG LTM candidate primary secondary cell has been released.

It should be noted that, a specific execution solution of retaining or releasing the configuration information of the SCG LTM candidate primary secondary cell in this embodiment is similar to a specific execution solution in the first scenario in which the device controlling the processing manner is the terminal device in the foregoing embodiment. Details are not described herein again.

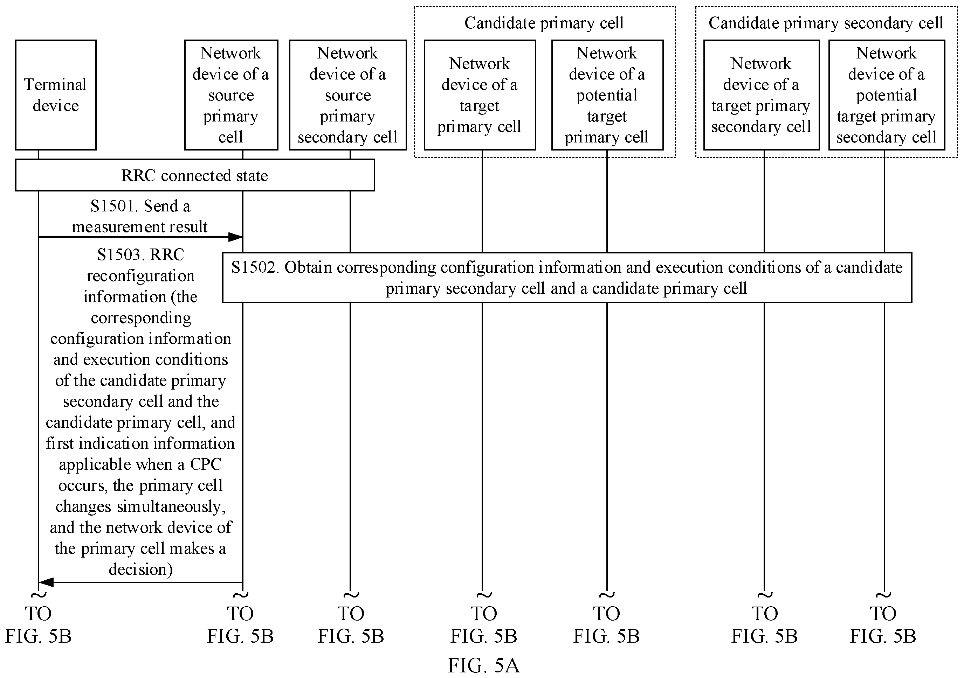

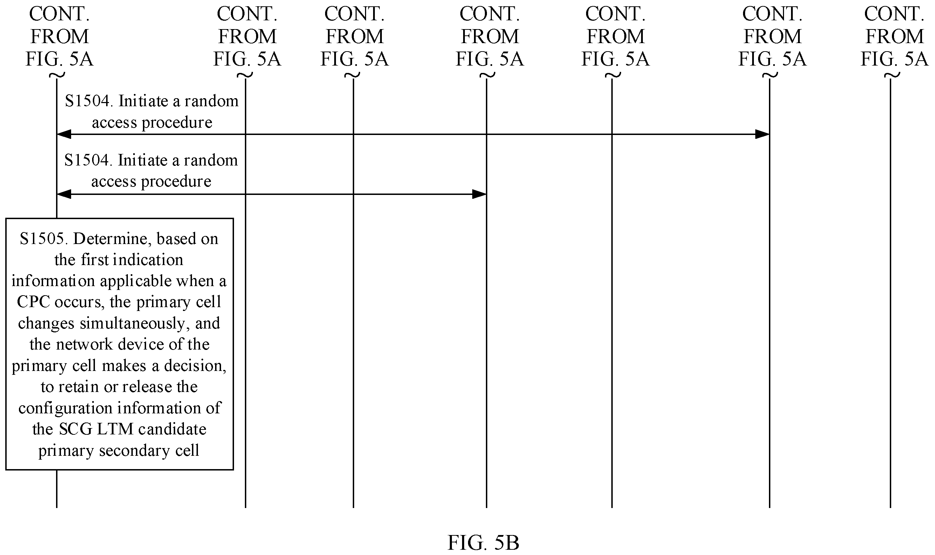

FIG. 5A and FIG. 5B are a diagram of signaling interaction between a terminal device and each network device when a CPC occurs, the primary cell changes simultaneously, and a network device of a primary cell makes a decision in an embodiment of this application from a perspective of device interaction. With reference to FIG. 5A and FIG. 5B, the following describes this embodiment of this application. It may specifically include S1501 to S1505 in the following.

S1501. A terminal device sends a measurement result to a network device of a source primary cell.

The terminal device, the network device of the source primary cell, and a network device of a source primary secondary cell are in an RRC connected state.

S1502. The network device of the source primary cell obtains corresponding configuration information and an execution condition from a network device of a candidate primary cell and a network device of a candidate primary secondary cell.

The candidate primary secondary cell includes a target primary secondary cell and a potential target primary secondary cell. There are one or more candidate primary secondary cells. The candidate primary cell includes a target primary cell and a potential target primary cell. There are one or more candidate primary cells.

S1503. The network device of the source primary cell sends RRC reconfiguration information to the terminal device, where the RRC reconfiguration information is used for carrying the configuration information of the candidate primary secondary cell and the execution condition, the configuration information of the candidate primary cell and the execution condition, and first indication information applicable when a CPC occurs, the primary cell changes simultaneously, and the network device of the primary cell makes a decision.

The first indication information applicable when a CPC occurs, the primary cell changes simultaneously, and the network device of the primary cell makes a decision includes the following information: second retaining indication information or second release indication information corresponding to configuration information of at least one SCG LTM candidate primary secondary cell when the primary cell changes simultaneously; and at least one of the following: (1) first retaining indication information corresponding to configuration information of at least one SCG LTM candidate primary secondary cell; (2) first release indication information corresponding to configuration information of at least one SCG LTM candidate primary secondary cell; (3) first retaining common indication information corresponding to configuration information of at least one SCG LTM candidate primary secondary cell represented in a form of a secondary cell set; and (4) first release common indication information corresponding to configuration information of at least one SCG LTM candidate primary secondary cell represented in a form of a secondary cell set.

It should be understood that the first indication information applicable when a CPC occurs, the primary cell changes simultaneously, and the network device of the primary cell makes a decision may alternatively be sent as an independent piece of signaling. To make the accompanying drawings brief and clear, only a case in which the first indication information is carried in the RRC reconfiguration information is described. However, the description is merely an example, and should not constitute any limitation on this application.

S1504. The terminal device initiates a random access procedure to the target primary secondary cell and the target primary cell when determining the target primary secondary cell and the target primary cell to change to.

It should be understood that, when the terminal device determines the target primary secondary cell and the target primary cell to change to, the network device of the source primary secondary cell and the network device of the source primary cell may further send an LTM handover command to the terminal device.

S1505. The terminal device determines, based on the first indication information applicable when a CPC occurs, the primary cell changes simultaneously, and the network device of the primary cell makes a decision, to retain or release the configuration information of the SCG LTM candidate primary secondary cell.

It should be noted that, a specific execution solution of retaining or releasing the configuration information of the SCG LTM candidate primary secondary cell in this embodiment is similar to a specific execution solution in the second scenario in which the device controlling the processing manner is the network device of the primary cell in the foregoing embodiment. Details are not described herein again.

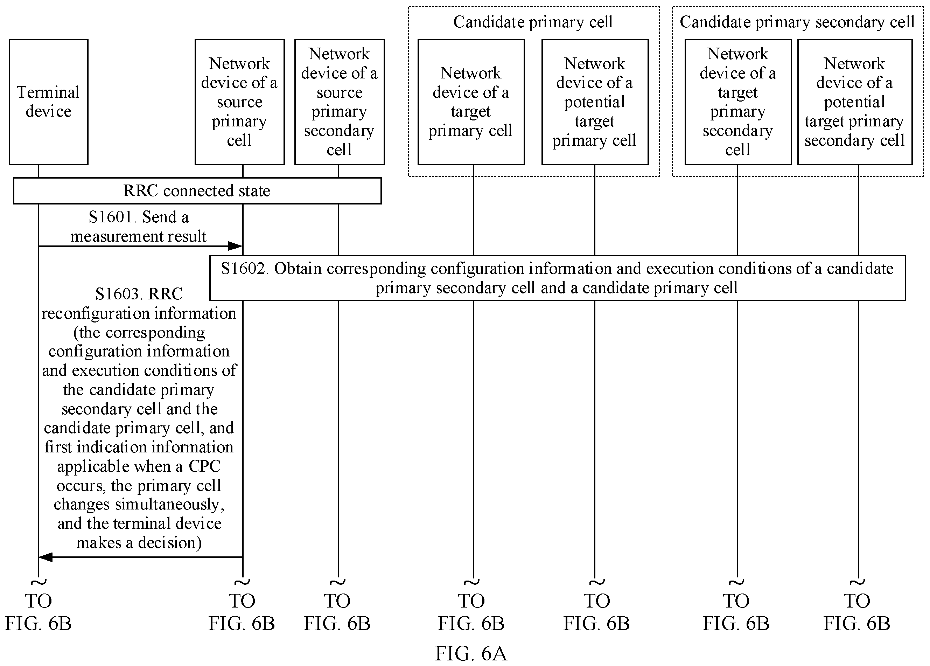

FIG. 6A and FIG. 6B are a diagram of signaling interaction between a terminal device and each network device when a CPC occurs, a primary cell changes simultaneously, and a terminal device makes a decision in an embodiment of this application from a perspective of device interaction. With reference to FIG. 6A and FIG. 6B, the following describes this embodiment of this application. It may specifically include S1601 to S1606 in the following.

S1601. A terminal device sends a measurement result to a network device of a source primary cell.

The terminal device, the network device of the source primary cell, and a network device of a source primary secondary cell are in an RRC connected state.

S1602. The network device of the source primary cell obtains corresponding configuration information and an execution condition from a network device of a candidate primary cell and a network device of a candidate primary secondary cell.

The candidate primary secondary cell includes a target primary secondary cell and a potential target primary secondary cell. There are one or more candidate primary secondary cells. The candidate primary cell includes a target primary cell and a potential target primary cell. There are one or more candidate primary cells.

S1603. The network device of the source primary cell sends RRC reconfiguration information to the terminal device, where the RRC reconfiguration information is used for carrying the configuration information of the candidate primary secondary cell and the execution condition, the configuration information of the candidate primary cell and the execution condition, and first indication information applicable when a CPC occurs, the primary cell changes simultaneously, and the terminal device makes a decision.

The first indication information applicable when a CPC occurs, the primary cell changes simultaneously, and the terminal device makes a decision includes the following information: second retaining indication information or second release indication information corresponding to configuration information of at least one SCG LTM candidate primary secondary cell when the primary cell changes simultaneously; and (1) indication information that the terminal device autonomously processes the configuration information of the SCG LTM candidate primary secondary cell; and (2) a secondary cell group to which each SCG LTM candidate primary secondary cell belongs.

It should be understood that the first indication information applicable when a CPC occurs, the primary cell changes simultaneously, and the terminal device makes a decision may alternatively be sent as an independent piece of signaling. To make the accompanying drawings brief and clear, only a case in which the first indication information is carried in the RRC reconfiguration information is described. However, the description is merely an example, and should not constitute any limitation on this application.

S1604. The terminal device initiates a random access procedure to the target primary secondary cell and the target primary cell when determining the target primary secondary cell and the target primary cell to change to.

It should be understood that, when the terminal device determines the target primary secondary cell to change to, the network device of the source primary secondary cell may further send an LTM handover command to the terminal device.

S1605. The terminal device determines, based on the first indication information applicable when a CPC occurs, the primary cell changes simultaneously, and the terminal device makes a decision, to retain or release the configuration information of the SCG LTM candidate primary secondary cell.

S1606. When releasing the configuration information of the SCG LTM candidate primary secondary cell, the terminal device sends third indication information to the network device of the target primary cell, where the third indication information is used for notifying the network device of the target primary cell that the configuration information of the SCG LTM candidate primary secondary cell has been released.

It should be noted that, a specific execution solution of retaining or releasing the configuration information of the SCG LTM candidate primary secondary cell in this embodiment is similar to a specific execution solution in the second scenario in which the device controlling the processing manner is the terminal device in the foregoing embodiment. Details are not described herein again.

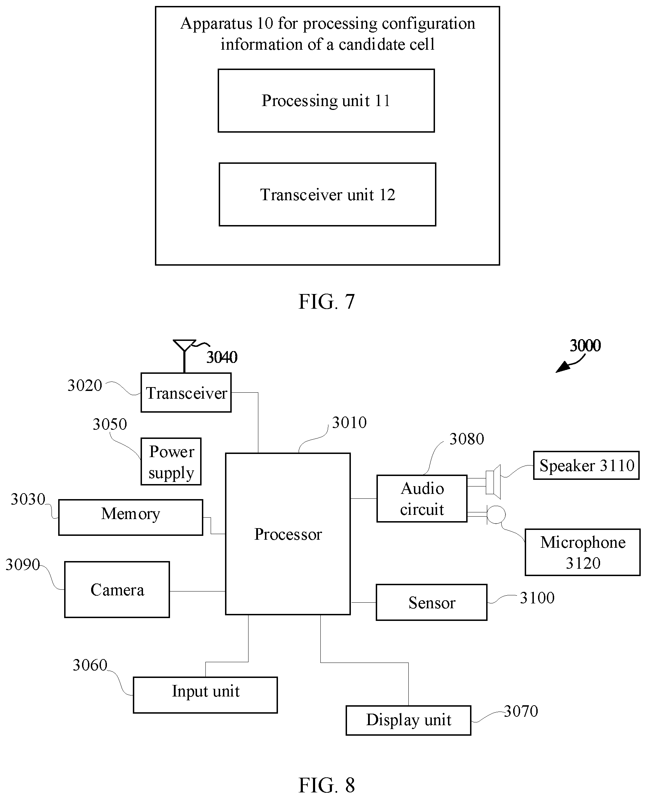

The method provided in the embodiments of this application is described in detail above with reference to FIG. 2 to FIG. 6A and FIG. 6B. The apparatus provided in the embodiments of this application will be described in detail below with reference to FIG. 7.

FIG. 7 is a schematic block diagram of an apparatus 10 for processing configuration information of a candidate cell according to an embodiment of this application. As shown in FIG. 7, the apparatus 10 for processing configuration information of a candidate cell may include a processing unit 11 and a transceiver unit 12.

In a possible design, the apparatus 10 for processing configuration information of a candidate cell may implement an operation corresponding to the terminal device in the foregoing method embodiment. For example, the apparatus for processing configuration information of a candidate cell may be a terminal device, or a component configured in the terminal device, such as a chip or a circuit.

The apparatus 10 for processing configuration information of a candidate cell may implement corresponding operations of the terminal device in the method embodiments shown in FIG. 2 to FIG. 6A and FIG. 6B. For example, the transceiver unit 12 may be configured to perform step 210 in the method 200, and the processing unit 11 may be configured to perform step 220 in the method 200. In addition, units in the apparatus 10 for processing configuration information of a candidate cell and the foregoing other operations and/or functions are respectively used for implementing corresponding procedures in the method embodiment shown in FIG. 2.

Specifically, when the apparatus 10 for processing configuration information of a candidate cell is configured to perform the method 200 in FIG. 2, the transceiver unit 12 may be configured to receive first indication information sent by a network device of a primary cell, where the first indication information indicates, to a terminal device, a policy for processing configuration information of a secondary cell group layer1/2 triggered mobility SCG LTM candidate primary secondary cell when a conditional primary secondary cell change CPC occurs; and the processing unit 11 may be configured to retain or release the configuration information of the SCG LTM candidate primary secondary cell based on the first indication information when determining a CPC target primary secondary cell to change to. The transceiver unit 12 may be further configured to communicate with the network device of the primary cell. The network device of the primary cell is a network device to which a source primary cell belongs.

In another possible design, the apparatus 10 for processing configuration information of a candidate cell may implement an operation corresponding to the network device of the primary cell in the foregoing method embodiment. For example, the apparatus for processing configuration information of a candidate cell may be a network device of a primary cell, or a component configured in the network device of the primary cell, such as a chip or a circuit.

The apparatus 10 for processing configuration information of a candidate cell may implement corresponding operations of the network device of the primary cell in the method embodiments shown in FIG. 2. For example, the transceiver unit 12 may be configured to perform step 210 in the method 200. In addition, units in the apparatus 10 for processing configuration information of a candidate cell and the foregoing other operations and/or functions are respectively used for implementing corresponding procedures in the method embodiment shown in FIG. 2.

Specifically, when the apparatus 10 for processing configuration information of a candidate cell is configured to perform the method 200 in FIG. 2, the transceiver unit 12 may be configured to send first indication information to the terminal device, where the first indication information indicates, to a terminal device, a policy for processing configuration information of a secondary cell group layer1/2 triggered mobility SCG LTM candidate primary secondary cell when a conditional primary secondary cell change CPC occurs.

It should be understood that specific processes in which the units perform the foregoing corresponding steps are described in detail in the foregoing method embodiments. For brevity, details are not described herein again.

It should be further understood that, division of the modules in the embodiments of this application is an example and is merely logical function division, and additional division manners may exist during actual implementation. In addition, functional modules in the embodiments of this application may be integrated into one processor, or may exist alone physically, or two or more modules may be integrated into one module. The foregoing integrated module may be implemented in the form of hardware, or may be implemented in a form of a software functional module.

It should be understood that the apparatus 10 for processing configuration information of a candidate cell may be corresponding to the terminal device 110 or the network device 120 of the primary cell in the communication system 100 shown in FIG. 1. The terminal device 110 may be an example of the terminal device, and the network device 120 of the primary cell may be an example of the network device of the primary cell. The processing unit 11 in the apparatus 10 for processing configuration information of a candidate cell may be corresponding to a processor in the terminal device 110 or the network device 120 of the primary cell, and the processor in the terminal device 110 or the network device 120 of the primary cell may invoke instructions stored in the memory, to implement the foregoing functions such as network encoding and obtaining original packages. The transceiver unit 12 may be corresponding to an interface in the terminal device 110 or the network device 120 of the primary cell, and may implement the foregoing functions of receiving and/or sending data in response to the instructions of the processor.

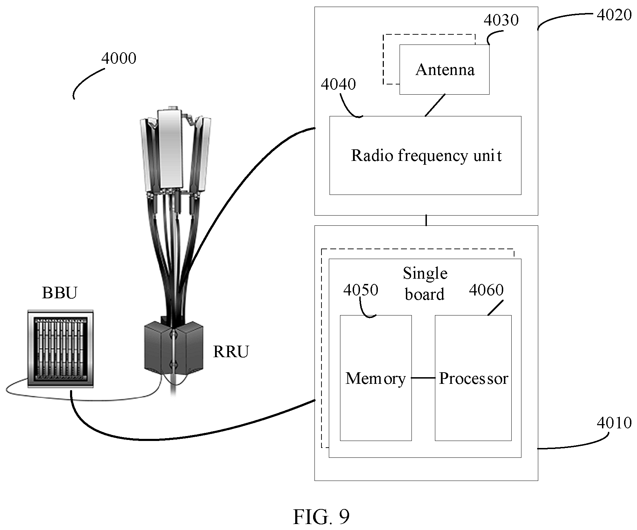

Specifically, the transceiver unit 12 in the apparatus 10 for processing configuration information of a candidate cell may be implemented by using a transceiver or a communication interface, for example, may correspond to a transceiver 3020 in a terminal device 3000 shown in FIG. 8 and a transceiver 4020 in a network device 4000 of a primary cell shown in FIG. 9. The processing unit 11 in the apparatus 10 for processing configuration information of a candidate cell may be implemented by using at least one processor, for example, may correspond to a processor 3010 in the terminal device 3000 shown in FIG. 8 and a processor 4060 in the network device 4000 of the primary cell shown in FIG. 9.

It should be understood that specific processes in which the units perform the foregoing corresponding steps are described in detail in the foregoing method embodiments. For brevity, details are not described herein again.

FIG. 8 is a schematic diagram of a possible structure of a terminal device 3000 according to an embodiment of this application. The terminal device 3000 may be used in the system shown in FIG. 1, and performs a function of the terminal device in the foregoing method embodiments. As shown in FIG. 8, the terminal device 3000 includes a processor 3010 and a transceiver 3020. Optionally, the terminal device 3000 further includes a memory 3030. The processor 3010, the transceiver 3020, and the memory 3030 may communicate with each other via an internal connection path, to transfer a control signal and/or a data signal. The memory 3030 is configured to store a computer program. The processor 3010 is configured to invoke the computer program from the memory 3030 and run the computer program, to control the transceiver 3020 to receive/send a signal. Optionally, the terminal device 3000 may further include an antenna 3040, configured to send, by using a radio signal, uplink data or uplink control signaling that is output by the transceiver 3020.

The processor 3010 and the memory 3030 may be combined into a processing apparatus, and the processor 3010 is configured to execute program code stored in the memory 3030 to implement the foregoing functions. During specific implementation, the memory 3030 may be integrated in the processor 3010, or may be independent of the processor 3010. The processor 3010 may correspond to the processing unit 11 in FIG. 7.

The transceiver 3020 may correspond to the transceiver unit 12 in FIG. 7. The transceiver 3020 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device 3000 shown in FIG. 8 can implement the processes related to the terminal device in the method embodiments shown in FIG. 2 to FIG. 6A and FIG. 6B. Operations and/or functions of the modules in the terminal device 3000 are separately intended to implement corresponding procedures in the foregoing method embodiments. For details, refer to the description in the foregoing method embodiments. To avoid repetition, detailed description is appropriately omitted herein.

The processor 3010 may be configured to perform an action implemented inside the terminal device that is described in the foregoing method embodiments. The transceiver 3020 may be configured to perform an action of sending to or receiving from the network device by the terminal device that is described in the foregoing method embodiments. For details, refer to the descriptions in the foregoing method embodiments. Details are not described herein again.

Optionally, the terminal device 3000 may further include a power supply 3050, configured to supply power to various devices or circuits in the terminal device.

In addition, to achieve more comprehensive functions for the terminal device, the terminal device 3000 may further include one or more of an input unit 3060, a display unit 3070, an audio circuit 30100, a camera 3090, a sensor 3100, and the like. The audio circuit may further include a speaker 3110, a microphone 3120, and the like.

FIG. 9 is a schematic diagram of a possible structure of a network device 4000 of a primary cell according to an embodiment of this application, for example, may be a schematic diagram of a structure of a base station. The base station 4000 may be applied to the system shown in FIG. 1, to perform a function of the network device of the primary cell in the foregoing method embodiments. As shown in FIG. 9, the base station 4000 may include one or more radio frequency units, such as a remote radio unit (remote radio unit, RRU) 4020 and one or more baseband units (BBU) (also referred to as a distributed unit (DU)) 4010. The RRU 4020 may be referred to as a transceiver unit, and corresponds to the transceiver unit 12 in FIG. 7. Optionally, the transceiver unit 4020 may also be referred to as a transceiver machine, a transceiver circuit, a transceiver, or the like, and may include at least one antenna 4030 and a radio frequency unit 4040. Optionally, the transceiver unit 4020 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 4020 is mainly configured to: receive and send a radio frequency signal, and perform conversion between the radio frequency signal and a baseband signal, for example, configured to send first indication information to a terminal device. The BBU 4010 is mainly configured to perform baseband processing, control a base station, and the like. The RRU 4020 and the BBU 4010 may be physically arranged together or physically separated, namely, a distributed base station.

The BBU 4010 is a control center of the base station, or referred to as a processing unit, which may correspond to the processing unit 11 in FIG. 7, and is mainly configured to complete a baseband processing function, such as channel coding, multiplexing, modulation, and spreading. For example, the BBU (processing unit) may be configured to control the base station to perform operation procedures related to a network device in the foregoing method embodiments, for example, to generate the foregoing indication information and the like.

In an example, the BBU 4010 may include one or more boards, and a plurality of boards may jointly support a radio access network (for example, an LTE network) of a single access standard, or may separately support radio access networks (for example, an LTE network, a 5G network, or another network) of different access standards. The BBU 4010 further includes a memory 4050 and a processor 4060. The memory 4050 is configured to store necessary instructions and data. The processor 4060 is configured to control the base station to perform a necessary action, for example, to control the base station to perform an operation procedure related to the network device in the foregoing method embodiments. The memory 4050 and the processor 4060 may serve one or more boards. In other words, a memory and a processor may be disposed on each board. Alternatively, the plurality of boards may share a same memory and a same processor. In addition, a necessary circuit may be further disposed on each board.

It should be understood that the base station 4000 shown in FIG. 9 can implement the processes of the target network device in the method embodiment in FIG. 2. Operations and/or functions of the modules in the base station 4000 are respectively used to implement corresponding procedures in the foregoing method embodiments. For details, refer to the description in the foregoing method embodiments. To avoid repetition, detailed description is appropriately omitted herein.

The BBU 4010 may be configured to perform an action implemented inside the network device that is described in the foregoing method embodiments. The RRU 4020 may be configured to perform an action of sending to or receiving from the terminal device by the network device that is described in the foregoing method embodiments. For details, refer to the descriptions in the foregoing method embodiments. Details are not described herein again.

It should be understood that the base station 4000 shown in FIG. 9 is merely a possible architecture of the network device of the primary cell, and should not constitute any limitation on this application. The method provided in this application is applicable to a network device in another architecture. For example, a network device including a CU, a DU, and an active antenna unit (active antenna unit, AAU). A specific architecture of the network device of the primary cell is not limited in this application.

An embodiment of this application further provides a processing apparatus including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (micro controller unit, MCU), a programmable controller (programmable logic device, PLD), or another integrated chip.

In an implementation process, the steps of the foregoing method may be implemented by using a hardware integrated logic circuit in the processor or instructions in a form of software. The steps of the method disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor. To avoid repetition, details are not described herein again.

It should be noted that, the processor in the embodiments of this application may be an integrated circuit chip, and has a signal processing capability. In an implementation process, the steps in the foregoing method embodiments may be implemented by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. The steps of the method disclosed with reference to the embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor.

It may be understood that the memory in the embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these memories and any memory of another proper type.

According to the method provided in the embodiments of this application, this application further provides a computer-readable storage medium. The computer-readable storage medium stores a computer program. When the computer program is executed by a processor, the computer is enabled to perform the method in any one of the embodiments shown in FIG. 2 to FIG. 6A and FIG. 6B.

According to the method provided in the embodiments of this application, this application further provides a chip system, including at least one processor and a communication interface, where the communication interface and the at least one processor are interconnected by using a line, and the at least one processor is configured to run a computer program or instructions, so that the computer performs the method in any one of the embodiments shown in FIG. 2 to FIG. 6A and FIG. 6B.

According to the method provided in the embodiments of this application, this application further provides a computer program product, including a computer program. When the computer program is run, the computer is enabled to perform the method in any one of the embodiments shown in FIG. 2 to FIG. 6A and FIG. 6B.

The network device and the terminal device in the foregoing apparatus embodiments completely correspond to the network device and the terminal device in the method embodiments. A corresponding module or unit performs a corresponding step. For example, a communication unit (a transceiver) performs a receiving or sending step in the method embodiments, and a step other than the sending step and the receiving step may be performed by a processing unit (a processor). For functions of specific units, refer to the corresponding method embodiments. There may be one or more processors.

Terms such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated in figures, both an application running on a computing device and the computing device may be components. One or more components may reside within a process and/or a thread of execution, and a component may be located on one computer and/or distributed between two or more computers. In addition, these components may be executed by various computer-readable media that store various data structures. For example, the components may communicate by using a local and/or remote process and based on a signal having one or more data packets (for example, data from two components interacting with another component in a local system, a distributed system, and/or across a network such as the Internet interacting with another system by using the signal).

A person of ordinary skill in the art may be aware that various illustrative logical blocks (illustrative logical block) and steps (step) described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, each of the units may exist alone physically, or two or more units are integrated into one unit.

In the foregoing embodiments, all or some functions of the functional units may be implemented by using software, hardware, firmware, or any combination thereof. When software is used to implement the function, all or some functions may be implemented in a form of a computer program product. The computer program product includes one or more computer instructions (programs). When the computer program instructions (programs) are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the prior art, or the part of the technical solutions may be implemented in a form of a software product. The computer software product is stored in a storage medium and includes several instructions for instructing a computer device (which may be a personal computer, a server, a network device, or the like) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for processing configuration information of a candidate cell, comprising:
receiving first indication information sent by a network device of a primary cell, wherein the first indication information indicates, to a terminal device, a policy for processing configuration information of a secondary cell group layer1/2 triggered mobility SCG LTM candidate primary secondary cell when a conditional primary secondary cell change CPC occurs; and
retaining or releasing the configuration information of the SCG LTM candidate primary secondary cell based on the first indication information when determining a CPC target primary secondary cell to change to.

2. The method according to claim 1, wherein the first indication information comprises at least one of the following:
first retaining indication information corresponding to configuration information of at least one SCG LTM candidate primary secondary cell;
first release indication information corresponding to configuration information of at least one SCG LTM candidate primary secondary cell;
first retaining common indication information corresponding to configuration information of at least one SCG LTM candidate primary secondary cell represented in a form of a secondary cell set; and
first release common indication information corresponding to configuration information of at least one SCG LTM candidate primary secondary cell represented in a form of a secondary cell set.

3. The method according to claim 2, wherein the configuration information of the SCG LTM candidate primary secondary cell is retained when a first condition is met, and the first condition comprises at least one of the following conditions:
the first indication information comprises first retaining indication information corresponding to the configuration information of the SCG LTM candidate primary secondary cell;
the first indication information comprises first release indication information, and the first release indication information does not comprise first release indication information corresponding to the configuration information of the SCG LTM candidate primary secondary cell;
the first indication information comprises first retaining common indication information of a secondary cell set to which the SCG LTM candidate primary secondary cell belongs; and
the first indication information comprises first release common indication information, and the first release common indication information does not comprise first release common indication information of a secondary cell set to which the SCG LTM candidate primary secondary cell belongs.

4. The method according to claim 2, wherein the configuration information of the SCG LTM candidate primary secondary cell is released when a second condition is met, and the second condition comprises at least one of the following conditions:
the first indication information comprises first release indication information corresponding to the configuration information of the SCG LTM candidate primary secondary cell;
the first indication information comprises first retaining indication information, and the first retaining indication information does not comprise first retaining indication information corresponding to the configuration information of the SCG LTM candidate primary secondary cell;
the first indication information comprises first release common indication information of a secondary cell set to which the SCG LTM candidate primary secondary cell belongs; and
the first indication information comprises first retaining common indication information, and the first retaining common indication information does not comprise first retaining common indication information of a secondary cell set to which the SCG LTM candidate primary secondary cell belongs.

5. The method according to claim 2, wherein the first indication information further comprises: second retaining indication information corresponding to configuration information of at least one SCG LTM candidate primary secondary cell when the primary cell changes simultaneously; or
second release indication information corresponding to configuration information of at least one SCG LTM candidate primary secondary cell when the primary cell changes simultaneously.

6. The method according to claim 5, wherein the retaining or releasing the configuration information of the SCG LTM candidate primary secondary cell based on the first indication information when determining a CPC target primary secondary cell to change to comprises:
retaining or releasing the configuration information of the SCG LTM candidate primary secondary cell based on the first indication information when it is determined that the primary cell and a CPC primary secondary cell are to be changed simultaneously.

7. The method according to claim 6, wherein the configuration information of the SCG LTM candidate primary secondary cell is retained when a third condition is met, and the third condition is at least one of the following conditions:
the first indication information comprises second retaining indication information corresponding to the configuration information of the SCG LTM candidate primary secondary cell when the primary cell changes simultaneously, and the first indication information comprises first retaining indication information corresponding to the configuration information of the SCG LTM candidate primary secondary cell;
the first indication information comprises second retaining indication information corresponding to the configuration information of the SCG LTM candidate primary secondary cell when the primary cell changes simultaneously, and the first indication information comprises first retaining common indication information of a secondary cell set to which the SCG LTM candidate primary secondary cell belongs;
the first indication information comprises second retaining indication information corresponding to the configuration information of the SCG LTM candidate primary secondary cell when the primary cell changes simultaneously, the first indication information comprises first release indication information, and the first release indication information does not comprise first release indication information corresponding to the configuration information of the SCG LTM candidate primary secondary cell;
the first indication information comprises second retaining indication information corresponding to the configuration information of the SCG LTM candidate primary secondary cell when the primary cell changes simultaneously, the first indication information comprises first release common indication information, and the first release common indication information does not comprise first release common indication information of a secondary cell set to which the SCG LTM candidate primary secondary cell belongs;
the first indication information comprises second release indication information, the second release indication information does not comprise second release indication information corresponding to the configuration information of the SCG LTM candidate primary secondary cell when the primary cell changes simultaneously, and the first indication information comprises first retaining indication information corresponding to the configuration information of the SCG LTM candidate primary secondary cell;
the first indication information comprises second release indication information, the second release indication information does not comprise second release indication information corresponding to the configuration information of the SCG LTM candidate primary secondary cell when the primary cell changes simultaneously, and the first indication information comprises first retaining common indication information of a secondary cell set to which the SCG LTM candidate primary secondary cell belongs;
the first indication information comprises second release indication information, the second release indication information does not comprise second release indication information corresponding to the configuration information of the SCG LTM candidate primary secondary cell when the primary cell changes simultaneously, the first indication information comprises first release indication information, and the first release indication information does not comprise first release indication information corresponding to the configuration information of the SCG LTM candidate primary secondary cell; and
the first indication information comprises second release indication information, the second release indication information does not comprise second release indication information corresponding to the configuration information of the SCG LTM candidate primary secondary cell when the primary cell changes simultaneously, the first indication information comprises first release common indication information, and the first release common indication information does not comprise first release common indication information of a secondary cell set to which the SCG LTM candidate primary secondary cell belongs.

8. The method according to claim 6, wherein the configuration information of the SCG LTM candidate primary secondary cell is released when a fourth condition is met, and the fourth condition is at least one of the following conditions:
the first indication information comprises second release indication information corresponding to the configuration information of the SCG LTM candidate primary secondary cell when the primary cell changes simultaneously;
the first indication information comprises second retaining indication information, and the second retaining indication information does not comprise second retaining indication information corresponding to the configuration information of the SCG LTM candidate primary secondary cell when the primary cell changes simultaneously;
the first indication information comprises second retaining indication information corresponding to the configuration information of the SCG LTM candidate primary secondary cell when the primary cell changes simultaneously, and the first indication information comprises first release indication information corresponding to the configuration information of the SCG LTM candidate primary secondary cell;
the first indication information comprises second retaining indication information corresponding to the configuration information of the SCG LTM candidate primary secondary cell when the primary cell changes simultaneously, and the first indication information comprises first release common indication information of a secondary cell set to which the SCG LTM candidate primary secondary cell belongs;
the first indication information comprises second release indication information, the second release indication information does not comprise second release indication information corresponding to the configuration information of the SCG LTM candidate primary secondary cell when the primary cell changes simultaneously, and the first indication information comprises first release indication information corresponding to the configuration information of the SCG LTM candidate primary secondary cell; and
the first indication information comprises second release indication information, the second release indication information does not comprise second release indication information corresponding to the configuration information of the SCG LTM candidate primary secondary cell when the primary cell changes simultaneously, and the first indication information comprises first release common indication information of a secondary cell set to which the SCG LTM candidate primary secondary cell belongs.

9. The method according to claim 1, wherein the first indication information comprises: indication information that the terminal device autonomously processes the configuration information of the SCG LTM candidate primary secondary cell; and
a secondary cell group to which each SCG LTM candidate primary secondary cell belongs.

10. The method according to claim 9, wherein the configuration information of the SCG LTM candidate primary secondary cell is retained when a fifth condition is met, and the fifth condition is: the secondary cell group to which the candidate primary secondary cell belongs is the same as a secondary cell group to which a source primary secondary cell belongs.

11. The method according to claim 9, wherein the configuration information of the SCG LTM candidate primary secondary cell is released when a sixth condition is met, and the sixth condition is: the secondary cell group to which the candidate primary secondary cell belongs is different from a secondary cell group to which a source primary secondary cell belongs.

12. The method according to claim 11, wherein the method further comprises:
sending second indication information to the network device of the primary cell, wherein the second indication information indicates to the network device of the primary cell that the terminal device has released the configuration information of the SCG LTM candidate primary secondary cell.

13. The method according to claim 9, wherein the first indication information further comprises: second retaining indication information corresponding to configuration information of at least one SCG LTM candidate primary secondary cell when the primary cell changes simultaneously; or
second release indication information corresponding to configuration information of at least one SCG LTM candidate primary secondary cell when the primary cell changes simultaneously.

14. The method according to claim 13, wherein the retaining or releasing the configuration information of the SCG LTM candidate primary secondary cell based on the first indication information when determining a CPC target primary secondary cell to change to comprises:
retaining or releasing the configuration information of the SCG LTM candidate primary secondary cell based on the first indication information when it is determined that the primary cell and a CPC primary secondary cell are to be changed simultaneously.

15. The method according to claim 14, wherein the configuration information of the SCG LTM candidate primary secondary cell is retained when a seventh condition is met, and the seventh condition is at least one of the following conditions:
the first indication information comprises second retaining indication information corresponding to the configuration information of the SCG LTM candidate primary secondary cell when the primary cell changes simultaneously, and the secondary cell group to which the candidate primary secondary cell belongs is the same as a secondary cell group to which a source primary secondary cell belongs; and
the first indication information comprises second release indication information, the second release indication information does not comprise second release indication information corresponding to the configuration information of the SCG LTM candidate primary secondary cell, and the secondary cell group to which the candidate primary secondary cell belongs is the same as the secondary cell group to which the source primary secondary cell belongs.

16. The method according to claim 14, wherein the configuration information of the SCG LTM candidate primary secondary cell is released when an eighth condition is met, and the eighth condition is at least one of the following conditions:
the first indication information comprises second release indication information corresponding to the configuration information of the SCG LTM candidate primary secondary cell when the primary cell changes simultaneously;
the first indication information comprises second retaining indication information, and the second retaining indication information does not comprise second retaining indication information corresponding to the configuration information of the SCG LTM candidate primary secondary cell when the primary cell changes simultaneously;
the first indication information comprises second retaining indication information corresponding to the configuration information of the SCG LTM candidate primary secondary cell when the primary cell changes simultaneously, and the secondary cell group to which the candidate primary secondary cell belongs is different from a secondary cell group to which a source primary secondary cell belongs; and
the first indication information comprises second release indication information, the second release indication information does not comprise second release indication information corresponding to the configuration information of the SCG LTM candidate primary secondary cell when the primary cell changes simultaneously, and the secondary cell group to which the candidate primary secondary cell belongs is different from the secondary cell group to which the source primary secondary cell belongs.

17. The method according to claim 16, wherein the method further comprises:
sending third indication information to a network device of a target primary cell, wherein the third indication information indicates to the network device of the target primary cell that the terminal device has released the configuration information of the SCG LTM candidate primary secondary cell.

18. The method according to any one of claims 1 to 17, wherein the first indication information is carried in radio resource control RRC reconfiguration information; or
the first indication information is carried in CPC configuration information, and the CPC configuration information is carried in the radio resource control RRC reconfiguration information.

19. A method for processing configuration information of a candidate cell, comprising:
sending first indication information to a terminal device, wherein the first indication information indicates, to a terminal device, a policy for processing configuration information of an SCG LTM candidate primary secondary cell when a CPC primary secondary cell change occurs.

20. The method according to claim 19, wherein the first indication information comprises at least one of the following:
first retaining indication information corresponding to configuration information of at least one SCG LTM candidate primary secondary cell;
first release indication information corresponding to configuration information of at least one SCG LTM candidate primary secondary cell;
first retaining common indication information corresponding to configuration information of at least one SCG LTM candidate primary secondary cell represented in a form of a secondary cell set; and
first release common indication information corresponding to configuration information of at least one SCG LTM candidate primary secondary cell represented in a form of a secondary cell set.

21. The method according to claim 19, wherein the first indication information comprises: indication information that the terminal device autonomously processes the configuration information of the SCG LTM candidate primary secondary cell; and
a secondary cell group to which each SCG LTM candidate primary secondary cell belongs.

22. The method according to claim 21, further comprising:
receiving second indication information sent by the terminal device, wherein the second indication information indicates to a network device of a primary cell that the terminal device has released the configuration information of the SCG LTM candidate primary secondary cell.

23. The method according to claim 20 or 21, wherein the first indication information further comprises: second retaining indication information corresponding to configuration information of at least one SCG LTM candidate primary secondary cell when the primary cell changes simultaneously; or
second release indication information corresponding to configuration information of at least one SCG LTM candidate primary secondary cell when the primary cell changes simultaneously.

24. The method according to claim 23, wherein if the first indication information comprises indication information that the terminal device autonomously processes the configuration information of the SCG LTM candidate primary secondary cell, the method further comprises:
receiving third indication information sent by the terminal device, wherein the third indication information indicates to a network device of a target primary cell that the terminal device has released the configuration information of the SCG LTM candidate primary secondary cell.

25. The method according to any one of claims 19 to 22, wherein the first indication information is carried in radio resource control RRC reconfiguration information; or
the first indication information is carried in CPC configuration information, and the CPC configuration information is carried in the radio resource control RRC reconfiguration information.

26. A terminal device, comprising: a processor, a memory, and a transceiver, wherein
the memory stores computer-executable instructions, and the transceiver is configured to receive and transmit data; and
the processor executes the computer-executable instructions stored in the memory, to enable the terminal device to perform the method according to any one of claims 1 to 18.

27. A network device of a primary cell, comprising: a processor, a memory, and a transceiver, wherein
the memory stores computer-executable instructions, and the transceiver is configured to receive and transmit data; and
the processor executes the computer-executable instructions stored in the memory, to enable the network device of the primary cell to perform the method according to any one of claims 19 to 25.

28. A computer-readable storage medium, the computer-readable storage medium storing a computer program, wherein when the computer program is executed by a processor, the method according to any one of claims 1 to 25 is implemented.

29. A chip system, comprising at least one processor and a communication interface, wherein the communication interface and the at least one processor are interconnected through a line, and the at least one processor is configured to run a computer program or instructions, to perform the method according to any one of claims 1 to 25.

30. A computer program product, comprising a computer program, wherein when the computer program is run, a computer is enabled to perform the method according to any one of claims 1 to 25.
